# EUROPÄISCHE PATENTANMELDUNG

(11) **EP 2 846 019 A1**
(43) Veröffentlichungstag der Anmeldung: **11.03.2015**
(21) Anmeldenummer: 13183821.1
(22) Anmeldetag: 10.09.2013
(51) Int. Cl.: F02B 27/00, F02B 33/32, F02B 37/16, F04B 45/04

(54) **Verfahren zum Betreiben eines Verbrennungsmotors und Verbrennungsmotor zur Durchführung des Verfahrens**

(71) Anmelder: Hofmann, Arno, 63571 Gelnhausen (DE)
(72) Erfinder: Hofmann, Arno, 63571 Gelnhausen (DE)
(74) Vertreter: Walkenhorst, Andreas

(57) **Zusammenfassung**

Bei einem Verfahren zum Betreiben eines Verbrennungsmotors (1, 1', 1 ", 1 "'), bei dem während eines Auslasstakts eines Zylinders (2) darin befindliches Abgas aus dem Zylinder (2) ab- und einer Auspuffanlage (12) zugeführt wird, soll auf besonders einfache und zuverlässige Weise eine besonders hohe spezifische Leistungsausbeute des Verbrennungsmotors (1, 1', 1 ", 1'") und/oder ein besonders gering gehaltener spezifischer Brennstoffverbrauch ermöglicht werden. Dazu wird erfindungsgemäß das aus dem Zylinder (2) abströmende Abgas in einer ersten Taktphase des Auslasstakts ganz oder teilweise der Primärseite einer Abgasladepumpe (30, 30') zugeführt und dort arbeitsleistend entspannt, bevor in einer zweiten Taktphase des Auslasstakts das in der Primärseite der Abgasladepumpe (30, 30') befindliche, vorentspannte Abgas gemeinsam mit sich ggf. noch im Zylinder (2) befindlichem Abgas zur Auspuffanlage (12) geleitet wird.

## Beschreibung

Die Erfindung bezieht sich auf ein Verfahren zum Betreiben eines Verbrennungsmotors, bei dem während eines Auslasstakts eines Zylinders darin befindliches Abgas aus dem Zylinder ab - und einer Auspuffanlage zugeführt wird. Sie bezieht sich weiter auf einen Verbrennungsmotor mit einer Anzahl von Zylindern, in denen jeweils ein auf eine gemeinsame Kurbelwelle wirkender Arbeitskolben geführt ist, wobei der Brennraum des oder jedes Zylinders jeweils einlassseitig über ein ansteuerbares Einlassventilsystem mit einem Gaseinlasssystem und auslassseitig über ein ansteuerbares Auslassventilsystem mit einer Auspuffanlage verbunden ist. Sie bezieht sich weiter auf eine Abgasladepumpe, insbesondere zur Verwendung in einem derartigen Verbrennungsmotor, und auf ein Absperrventil.

Verbrennungsmotoren oder Wärmekraftmaschinen finden in weiten Bereichen vielfältigen Einsatz, beispielsweise als Antriebseinheiten von Kraftfahrzeugen oder auch in stationärer Ausführung in Industrieanlagen oder anderen technischen Einrichtungen. Ein Verbrennungsmotor oder eine Wärmekraftmaschine kann dabei im Otto- oder Dieselverfahren mit unterschiedlichen flüssigen oder gasförmigen Brennstoffen betrieben werden. Den verschiedenen Bauformen ist gemeinsam, dass üblicherweise in einem Brennraum eines Zylinders (oder in analoger Ausführung bei einem Wankelmotor in einer Drehscheibenkammer) ein komprimiertes Brennstoff-Luft-Gemisch zur Explosion gebracht wird, so dass in Reaktion hierauf ein in dem jeweiligen Zylinder verschiebbar angeordneter Kolben einen Arbeitshub ausführt und dabei eine Motorwelle arbeitsleistend antreibt. Nach der Vollendung des Arbeitshubs, also nach vollständiger Expansion des verbrannten Arbeitsgases im Zylinder, wird das verbrannte Arbeitsgas als Abgas während eines Auslasstakts des jeweiligen Zylinders einer auslassseitig an diesen angeschlossenen Auspuffanlage zugeführt.

In gängiger Bauweise kann der Verbrennungsmotor dabei als 4-Takt-Motor ausgeführt sein, bei dem die Freigabe des in die Auspuffanlage führenden Abgassystems über ein im Zylinder angeordnetes Auslassventil erfolgt. In alternativer gängiger Bauweise kann der Verbrennungsmotor aber auch als 2-Takt-Motor ausgeführt sein, bei dem der Auslasstakt als Bestandteil des eigentlichen Arbeitstakts ausgeführt ist, wobei die Freigabe des in die Auspuffanlage mündenden Abgassystems schlitzgesteuert erfolgt, indem der Kolben in der Endphase seiner Hubbewegung über im Zylinder angeordnete Auslassschlitze hinweggleitet und diese anschließend freigibt. Ebenso ist gaseinlassseitig bei 4-Takt-Motoren üblicherweise ein entsprechendes Einlassventilsystem vorgesehen, wohingegen diese Funktionalität bei 2-Takt-Motoren ebenfalls durch im Zylindermantel angeordnete Spülschlitze dargestellt wird. Weiterhin existieren Ventilsysteme auf Basis von Drehschiebern, bei denen Kanalquerschnitte im Zylinderkopf durch rotierende Drehschieber freigegeben bzw. verschlossen werden. Drehschiebersteuerungen werden für Zwei- und Viertaktverfahren angewendet. Die im folgenden stellvertretend verwendeten Begriffe "Einlassventilsystem" und "Auslassventilsystem" beziehen sich daher im Falle von 2-Takt-Motoren ausdrücklich auch auf die entsprechenden Schlitzanordnungen im Zylindermantel, über die die entsprechenden Ventilfunktionen analog zur eigentlichen Verkörperung in 4-Takt-Motoren mit Hilfe von Tellerventilen bzw. Drehschiebern dargestellt werden.

Für Verbrennungsmotoren oder Wärmekraftmaschinen jeglicher Bauart (z. B. auch Stirlingmotoren, Dampfmotoren, etc) werden seit geraumer Zeit als gängige Auslegungsziele eine Steigerung der nutzbaren Arbeitsleistung pro Hubraumeinheit des jeweiligen Zylinders und/oder eine Effizienzsteigerung/Vermin-derung des spezifischen Brennstoffverbrauchs angestrebt. Im Hinblick auf diese Auslegungsziele sind einige Konzepte zur Nutzung oder Rückgewinnung der im aus dem Zylinder abströmenden Abgas mitgeführten Restenergie entwickelt worden.

Hierzu zählt zum Einen die Abgasturboaufladung. Die Abgasturboaufladung entzieht dem Abgasstrom Enthalpie und führt diese dem Motor in Form von Kompressionsarbeit eines Frischgasstromes wieder zu. Gemäß den Eigenschaften einer Strömungsmaschine zeigt die Abgasturboaufladung unter der Voraussetzung eines kontinuierlichen Abgasenthalpiestroms hohe Wirkungsgrade. Je größer die stochastischen Schwankungen des Abgasenthalpiestroms werden, desto schlechter gestaltet sich jedoch der Wirkungsgrad der Turbine. Dies hat zur Folge, dass Abgasturbolader in der Praxis für Kolbenmotoren erst ab einer Zylinderzahl von drei gute Wirkungsgrade zeigen, an Zweizylindermotoren nur bedingt (vorzugsweise bei symmetrischer Zündfolge) einsetzbar und an Einzylindermotoren nicht effizient betreibbar sind.

Verbrennungsmotoren mit kleinen Hubräumen erfordern prinzipiell kleine Schaufeldurchmesser an Turbine und Verdichter. Sowohl der Turbinen-, als auch der Verdichterwirkungsgrad nehmen mit kleineren Schaufeldurchmessern ab, da u.a. die Spaltverluste zwischen Schaufeln und Gehäuse überproportional wachsen. Ungünstig erweist sich auch das Ansprechverhalten (Instationärverhalten) von Abgasturboladern bei Lastsprüngen im Verbrennungsmotor, da ausgehend von niedriger Last (geringe Abgasenthalpie) der allmähliche Enthalpieanstieg vor der Turbine das Laufzeug auf Grund von dessen Massenträgheit erst verzögert beschleunigt, was bekanntermaßen als so genanntes "Turboloch" zu einem langsamen Druckanstieg auf der Verdichterseite führt. Dieser Effekt tritt bei hubraumkleinen Motoren ausgeprägter auf, da das Massenträgheitsmoment des Laufzeugs nicht so stark abnimmt wie der Abgasenthalpiestrom, und ist bei Ottomotoren wegen der größeren Spreizung der Abgasenthalpie ausgeprägter als bei Dieselmotoren. Dynamisch betriebene Kleinmotoren, wie in Fahrzeugen und stromgeführten Blockheizkraftwerken, sind mit Abgasturboladern daher kaum betreibbar.

Der als Alternative denkbare Druckwellenlader ist ein Aufladesystem, das ebenso wie der Abgasturbolader dem Abgasstrom Enthalpie entzieht und diese der angesaugten Verbrennungsluft als Kompressionsarbeit zuführt. Der Druckwellenlader zeigt ein gutes Instationärverhalten und hohe Ladegrade auch bei niedrigen Motordrehzahlen. Nachteilig erweist sich das zwischen Abgas und Frischluft "offene" Gaswechselsystem dadurch, dass der Lader beim Startvorgang des Motors umgangen werden muss, um Spülkurzschlüsse zu verhindern, und er auch keine Drosselung der Ansaugluft verträgt, wodurch der Lader für dynamisch betriebene Ottomotoren im Teillastbetrieb ungeeignet erscheint. Auch ist das akustische Verhalten auf Grund der direkten Verbindung von Abgas- und Frischgasleitung problematisch. Großes Bauvolumen und Gewicht sowie die Notwendigkeit, den Lader synchron zur Motordrehzahl anzutreiben, machen den Druckwellenlader für kleinvolumige Ottomotoren unrentabel.

Eine weitere Möglichkeit, Abgasenthalpie in Nutzarbeit umzuwandeln, kann durch eine nochmalige Expansion des Abgases aus dem Arbeitszylinder eines Verbrennungsmotors in einem weiteren Expansionszylinder erfolgen. Unter den Veröffentlichungen u.a. von Mario Illien und Gerhard Schmitz (http://www.5-takt-motor.com/de/News.html) ist ein solches System beschrieben, das zwei im Viertaktverfahren und mit gleicher Zündfolge arbeitende Hochdruckzylinder mit einem hubraumgrößeren Niederdruckzylinder, der 180° Kurbelwelle versetzt arbeitet, koppelt. Erreicht ein Hochdruckzylinder nach dem Arbeitstakt den unteren Totpunkt (UT), so öffnet dessen Auslasssystem den Kanal zum Niederdruckzylinder, der sich im oberen Totpunkt (OT) befindet. Wegen des größeren Hubvolumens des Niederdruckzylinders expandiert das Arbeitsgas weiter, obwohl durch den aufwärts gehenden Kolben des Hochdruckzylinders sich dessen Volumen wieder verkleinert. Thermodynamisch wird mit dieser Anordnung das Expansionsverhältnis im Verbrennungstakt vergrößert, wodurch der thermodynamische Wirkungsgrad steigt.

Nachteilig an Systemen mit separatem Niederdruckzylinder ist die hohe Wärmebelastung des Überströmkanals im Zylinderkopf zu sehen, der höhere Abgasgegendruck bei Ventilüberschneidung (Spülung) eines Hochdruckzylinders, der erhebliche Mehraufwand an Motorgewicht und -bauraum für den Niederdruckzylinder, die Reibungsverluste (zusätzliche Kolbengruppe und Kurbeltrieb) des Niederdruckzylinders und die Tatsache, dass der sinnvoller Weise im Zweitakt arbeitende Niederdruckzylinder mit je zwei Hochdruckzylindern gleichen Zündabstands kombiniert werden sollte. Die Systemkosten liegen sehr hoch. Somit stellt sich diese Bauart für Einzylindermotoren wenig aussichtreich dar.

Aus den DE 36 25 050 A1, DE 36 25 048 A1, DE 36 25 051 A1, DE 36 25 053 A1, DE 33 18 136 A1 und der Veröffentlichung Schatz et al., "Pulse Charging - a new approach for dynamic charging", Second International Conference New Development Powertrain Chassis, England 1989, ist als weiteres alternatives Konzept zur Leistungs- oder Effizienzsteigerung eines Verbrennungsmotors ein so genannter "Abgasimpulslader" bekannt. Der Abgasimpulslader wandelt Abgasenthalpie eines Verbrennungsmotors in Kompressionsarbeit von Frischgas um. Das System besteht aus einem Freikolben, der in einem Zylinder geführt wird. Eine Seite des Zylinders ist mit dem Auslasssystem des Motors über einen Abgaszuströmkanal verbunden, die andere Seite des Zylinders mit dem Einlasssystem. Eine Feder drückt den Freikolben an dessen abgasseitigen Anschlag im Zylinder, so dass der Freikolben im Druck-unbelasteten Zustand ein maximales Frischgas-seitiges Volumen freigibt und entsprechend ein minimales Abgas-seitiges Volumen. Der Freikolben besitzt wahlweise mittig auf dessen Abgasseite eine Schirmung, die das abgasseitige Zylindervolumen ab einem bestimmten Freikolbenhub zum Abgasabströmkanal freigibt, um das Abgas in den Schalldämpfer zu leiten, oder ein durch den Abgasdruck in der Abgasladepumpe gesteuertes Ventil, das den Abgasabströmkanal freigibt bzw. verschließt. Die Steuerung des Abgasabströmkanals durch ein von der Freikolbenbewegung zumindest teilweise unabhängig bewegtes, durch das Abgas angetriebene Ventil beabsichtigt, einen verlängerten Expansionshub des Freikolbens zu ermöglichen. Frischgasseitig kann das Zylindervolumen atmosphärische Luft über ein Rückschlagventil ansaugen, die bei Volumenverkleinerung in das Einlasssystem des Motors gedrückt wird.

Die Veröffentlichung "Pulse Charging - a new approach for dynamic charging" beschreibt Versuchsergebnisse des Abgasimpulsladers an einem Zweizylindermotor. Öffnet ein Auslassventil eines Motorzylinders, strömt Abgas in den Abgasimpulslader und beschleunigt den Freikolben gegen die Federkraft. Das Abgas verrichtet Expansionsarbeit im Abgasimpulslader, bis die Schirmung am Freikolben den Entspannungskanal freigibt. Die Massenträgheit des Freikolbens lässt diesen im Zylinder weiterlaufen, bis dessen kinetische Energie in Summe die potentielle Energie der Feder und der durch den Freikolben verdichteten Frischluft im Einlasssystem erreicht hat. Durch die symmetrische Phasenlage der beiden Motorzylinder zueinander wird der Freikolben durch das Öffnen des Motorauslassventils des ersten Motorzylinders um dessen Kolbenlage im UT bewegt, was einer Kolbenlage des zweiten Motorzylinders im UT kurz vor schließendem Motoreinlassventil entspricht, so dass ein Teil der durch den Freikolben momentan komprimierten Frischluft über das Einlasssystem unverzüglich vor Einlassende in Zylinder Zwei geschoben und dessen Luftdichte somit erhöht wird. Die Federkraft und komprimierte Frischluft im Einlasssystem drücken den Freikolben zurück in seine Ruheposition, d.h. bis zum abgasseitigen Anschlag. Nach 360°KW beginnt das Arbeitsspiel des Abgasimpulsladers von vorne, jedoch wechseln die beiden Motorzylinder bezogen auf den Abgasimpulslader ihre Funktion.

Im Versuch zeigte der Abgasimpulslader gutes Instationärverhalten bei niedrigen Motordrehzahlen (bis ca. 2000 U/min) und ebenso eine Steigerung des Luftaufwands. Bei höheren Drehzahlen (ab ca. 3000 U/min) erfolgte keine Ladedrucksteigerung mehr.

Der Abgasimpulslader weist einige thermodynamische und mechanische Nachteile auf, die seinen Wirkungsgrad und seine Funktion beeinträchtigen:
- Erhebliche Schadvolumina auf der Abgasseite (Kurzschlussverbindung zwischen Abgaszuströmkanal und Abgasabströmkanal), die sowohl den Abgasdruck vor dem Freikolben reduzieren als auch den Endkompressionsdruck im Einlasssystem
- Die relativ kurze Länge der Schirmung am Freikolben, die den Abgasstrom aus dem Abgasimpulslader in den Schalldämpfer freigibt, erlaubt nur einen kleinen Teil des Hubs des Freikolbens als Arbeitshub zur Entspannung der Motorabgase zu nutzen. Der Abgasimpulslader nutzt damit primär den Impuls der Abgassäule beim Öffnen des korrespondierenden Motorauslassventils und weniger den sich aufbauenden Staudruck
- Die Schirmung des Freikolbens muss eine nicht unerhebliche Leckage in geschlossenem Zustand aufweisen, damit der Freikolben sich nach jedem Arbeitsspiel in seine Ruheposition zurück bewegen kann. Diese Leckageverluste stellen einen weiteren Druckverlust und damit Arbeitsverlust dar.
- Die Steuerung des Abgasabströmkanals über ein durch Abgasdruck und Massenträgheit gesteuertes Ventil stellt einerseits eine sehr ungenaue Einhaltung der Abgas-Steuerzeiten dar (Reibverhältnisse und Eigenschwingverhalten), andererseits ist es mit den vorgeschlagenen Ventilsystemen nicht möglich, annähernd das thermodynamisch ideale Abgassteuerdiagramm zu erreichen, in dem der volle Hub des Freikolbens als Arbeitshub mit geschlossenem Abgasabströmkanal genutzt wird und bei rücklaufendem Freikolben der Abgasabströmkanal vollends geöffnet ist. Die vorhandenen Massenträgheiten des Ventils und des Freikolbens verbieten das ideale Abgassteuerdiagramm, da die beschleunigten Massen einer Verzögerungsstrecke zur Richtungsumkehr bedürfen. Die notwendige Auslegung des abgasgetriebenen Ventilbetätigungsmechanismus auf einen bestimmten Abgasdruck hat zur Folge, dass sich die Abgas-Steuerzeiten unter Last- bzw. Drehzahländerungen des Motors kontraproduktiv ändern. Insbesondere spricht der abgasgetriebene Ventilbetätigungsmechanismus auf geringe Abgasdrücke (Niedriglast, Leerlauf) nicht an, womit auch der Abgasimpulslader keine Expansionsarbeit verrichtet, obwohl gerade im Teillastbereich bei mengengeregelten Ottomotoren relativ hohe Abgasenthalpien bezogen auf die spezifische Motorarbeit zur Verfügung stehen, da der Motor im gedrosselten Zustand ein geringes effektives Verdichtungsverhältnis und entsprechend niedriges Expansionsverhältnis aufweist. Es ist unmöglich, das Schließende des Ventils des Abströmkanals, das Druck- und Massenträgheit gesteuert ist, zeitgleich auf das Schließende der Motorauslassventils über die im Motorbetrieb vorkommenden Last- und Drehzahlspreizungen zu legen. Insbesondere ist bei den hier angeführten Schriften das Schließen des Ventils des Abströmkanals ausschließlich auf den Zeitpunkt des Entleerens der Abgasseite des Abgasimpulsladers bezogen und keine Korrelation zur Phasenlage bzw. dem Schließende des Motorauslassventils beschrieben.
- Freikolben und Feder (einschließlich der Luftfeder im Einlasstrakt) stellen einen harmonischen Oszillator dar, dessen Eigenfrequenz von den bewegten Massen (Kolben, Linearführungsstange und halbe Federmasse) und der Federrate abhängt. Gerät dieses System in die Nähe seiner Eigenfrequenz, stellen sich erhebliche Amplitudenausschläge ein, die den Freikolben mit hoher Beschleunigung an seine Anschläge im Zylinder prallen lassen können. Die absehbar hohen Massen der bewegten Bauteile, die mehrere 100 Gramm betragen dürften, und die notwendig schwachen Federkräfte, die auch bei geringeren Abgasdrücken (ca. 2 bar) eine Bewegung des Freikolbens zulassen müssen, legen nahe, dass die Eigenfrequenz des Systems bereits bei niedrigen Motorbetriebszahlen erreicht wird. Der am beschriebenen Versuchsmotor schnell abfallende Ladedruck des Abgasimpulsladers ab 2000 U/min lässt darauf schließen, dass die Eigenfrequenz hier bereits überschritten wurde und das System nicht mehr den vollen Arbeitshub vollzieht. Der Freikolben hat beim Überschreiten seiner Eigenfrequenz nicht genügend Zeit, in seine Ruhelage zurückzukehren. Ab ca. 3000 U/min baut sich am beschriebenen Versuchsmotor kein Ladedruck mehr auf. Vermutlich befindet sich der Freikolben etwa auf halben Kolbenweg in Ruhestellung.
- Das System des Freikolbens ist über wechselnde Abgasdrücke und sich ändernde Luftfederrückstellraten in seiner Eigenfrequenz und seinem Kolbenhub nicht eindeutig bestimmt, so dass Kollisionen des Freikolbens an seinen Endlagen im Zylinder zu erwarten sind.
- Die Abdichtung des Freikolbens zur Zylinderwand muss entweder berührungsfrei über einen Spalt geschehen, so dass sich auf Grund der großen Zylinderbohrung erhebliche Leckageströme von der Abgas- auf die Frischgasseite einstellen werden, oder es werden Dichtelemente z.B. Kolbenringe verwendet, die jedoch einer Schmierung bedürfen und erhöhte Reibung erzeugen werden.
- Der gesamte Abgasstrom wird durch den Abgasimpulslader geleitet und trägt damit zu einer hohen Wärmebelastung des Ladergehäuses und des Freikolbens bei.

Ein weiteres alternatives Konzept zur Leistungs- oder Wirkungsgradsteigerung von Verbrennungsmotoren ist die Nachschaltung eines Dampfprozesses (ORC). Dabei sind zur Nutzung von Abgasenthalpie bzw. Restwärme Dampfprozesse mit Kolben- bzw. Turbinenexpansionsmaschinen vorgesehen, die vorzugsweise mit niedrig siedenden organischen Arbeitsstoffen betrieben werden (ORC= Organic-Rankine-Cycle). Solche Prozesse entziehen dem Abgasstrom ausschließlich Wärme über Wärmetauscher. Auf Grund der geringen Temperaturhübe (physikalische Arbeitsstoffbeschränkung) bei einstufiger Prozeßführung sind die Wirkungsgrade selten höher als 15%. Die thermische Trägheit von Wärmetauschern und Leitungssystemen verhindert ein gutes Instationärverhalten, so dass diese Systeme nicht geeignet sind, mechanische Nutzleistung direkt in dynamisch betriebene Verbrennungsmotoren einzuspeisen. Insbesondere die hohen Systemkosten, die z. Zt. bei mehr als 3000€/kW liegen, verhindern eine Anwendung bei Kleinmotoren.

Alternativ kann auch eine thermoelektrische Energieumwandlung unter Nutzung des Seebeck-Effekts vorgesehen sein. Dieser Effekt beschreibt die elektrische Potentialdifferenz zweier Körper unterschiedlicher Temperatur auf Grund von differierenden Elektronengasdichten im Kristallgitter dieser Körper. Die Potentialdifferenz steigt mit dem Temperaturunterschied der Körper zueinander und kann zum Fließen eines elektrischen Stromes genutzt werden. Mit dem Abgas von Verbrennungsmotoren wird einer der Körper aufgeheizt, der andere wird vorzugsweise auf Atmosphärentemperatur gehalten. Das System kommt vollständig ohne bewegte Komponenten aus und stellt somit auch keine Arbeitsmaschine dar.

Der Erfindung liegt nunmehr die Aufgabe zu Grunde, ein alternatives Verfahren zum Betreiben eines Verbrennungsmotors der oben genannten Art anzugeben, mit dem auf besonders einfache und zuverlässige Weise eine besonders hohe spezifische Leistungsausbeute des Verbrennungsmotors und/oder ein besonders gering gehaltener spezifischer Brennstoffverbrauch ermöglicht ist. Weiterhin soll ein Durchführung des Verfahrens besonders geeigneter Verbrennungsmotor angegeben werden.

Bezüglich des Verfahrens wird diese Aufgabe erfindungsgemäß gelöst, indem das aus dem Zylinder abströmende Abgas in einer ersten Taktphase des Auslasstakts ganz oder teilweise der Primärseite einer Abgasladepumpe zugeführt und dort arbeitsleistend entspannt wird, bevor in einer zweiten Taktphase des Auslasstakts das in der Primärseite der Abgasladepumpe befindliche, vorentspannte Abgas gemeinsam mit sich gegebenenfalls noch im Zylinder befindlichem Abgas zur Auspuffanlage geleitet wird.

Erste und zweite Taktphase entsprechen in der Summe ihrer Zeitdauern bevorzugt etwa der Gesamtöffnungszeit des entsprechenden Motorauslassventils, wobei der Beginn der ersten Phase mit dem Öffnen des Motorauslassventils einhergeht und das Ende der zweiten Phase etwa mit dem Schließen des Motorauslassventils zusammenfällt, bzw. auch etwas verzögert stattfinden kann. Eine kurze erste Taktphase reduziert die Wandwärmeverluste im Auslasskanal und der Abgasladepumpe und ermöglicht mit einem frühzeitigen Druckabbau im Motorzylinder eine entsprechend geringe Ausschiebearbeit bzw. niedrigen Abgasgegendruck beim Ladungswechsel. Die Steuerung der Taktphasen wird bevorzugt durch eine vom Abgasdruck im Auslasskanal und vom Betriebszustand der Abgasladepumpe unabhängige Ventil- bzw. Schlitzsteuerung ausgeführt, die synchron zur Motor(kurbel)welle betrieben wird.

Die Erfindung geht dabei von der Überlegung aus, dass als besonders geeigneter Ansatzpunkt für eine Wirkungsgrad- und/oder Leistungssteigerung des Verbrennungsmotors die Nutzung der im aus dem Zylinder abströmenden Abgas noch mitgeführten Restenthalpie gewählt werden sollte, da betriebsbedingt das Abgas aus dem jeweiligen Zylinder mit einem vergleichsweisen hohen Restdruck abströmt, der zur zusätzlichen Bereitstellung von Nutzleistung herangezogen werden kann, bevor das Abgas an die auf Umgebungsdruck befindliche Umwelt abgegeben wird.

Im Fokus der Anwendungen für die Abgasladepumpe stehen insbesondere Ein- und Zweizylinderverbrennungsmotoren, die relativ kleine Einzelzylindervolumina von ca. 50-250 ccm aufweisen. Für diese Motorengattungen existiert bisher kein wirtschaftlich nutzbares System zur Umwandlung von (verlorener) Abgasenergie in mechanische (Antriebs-) Energie. Die Abgasladepumpe sollte bevorzugt mit folgenden Randbedingungen dieser Motorengattungen effizient betreibbar sein, bzw. die Eigenschaften aufweisen:
- Für Motordrehzahlen bis ca. 10000U/min (Zweiradmotoren)
- Auch hohe Schwankungen des Abgasmassenstroms (Einzylindermotoren) effizient umwandeln
- Der Förderstrom des Frischgases sollte etwa proportional zu Last und Drehzahl
   erfolgen
- Geringen Abgasgegendruck im Ausschiebetakt und Ladungswechsel hervorrufen
- Grundsätzliche Trennung von Abgas- und Frischgasleitungen
- Gutes Instationärverhalten (Fahrzeuganwendung)
- Geringe Eigen(reib)verluste
- Gutes akustisches Verhalten (Zweiradmotoren)
- Geringe Systemkosten
- Wartungsarmut
- Thermisch möglichst geringer Belastung unterliegen
- Eignung für sowohl für Otto- und Dieselmotoren, als auch Zwei- und Viertaktverfahren

Zur Erfüllung dieser Kriterien ist die Aufteilung des Auslasstakts in die zumindest zwei Teilphasen vorgesehen. Die Länge der ersten Taktphase (Zeitquerschnitte) ist dabei vorzugsweise so bemessen, dass bei der angestrebten Höchstdrehzahl unter Volllast des Motors dem der Primärseite der Abgasladepumpe zugeführte Abgasstrom gerade genügend Zeit zum Verrichten der gewünschten Volumenarbeit (Expansion) bereit gestellt wird. Für alle niedrigeren Last- bzw. Drehzahlbetriebspunkte des Motors steht dem zur Folge immer ein Überangebot an Zeitquerschnitten der ersten Taktphase zur Verfügung. Die erste Taktphase beträgt besonders bevorzugt etwa 1/3 bis 1/10 der Steuerlänge der zweiten Taktphase.

Um den Ansprüchen an die Abgasenthalpieschwankungen, gutem Instationärverhalten, kleine Zylinderhubräume und zur Motordrehzahl proportionalem Förderstrom zu genügen, wird die Abgasladepumpe vorzugsweise als Pumpe mit oszillierendem Pumpenkörper ausgelegt, der synchron zur Abgasdruckwelle im Auslasskanal des mit ihr verbundenen Motorzylinders ein Arbeitsspiel leistet.

Hohe Betriebsfrequenz der Abgasladepumpe für hochdrehende Motoren, gutes Instationärverhalten, die Trennung der Abgas- und Frischgasleitungen, geringe Reibverluste und Wartungsarmut werden erreicht, indem der Pumpenkörper besonders bevorzugt als elastisch verformbare, vorzugsweise gewichtsminimierte Trennwand zwischen Abgas- und einer Frischgasseite der Abgasladepumpe ausgelegt wird. Vorzugsweise wird die geleistete Expansionsarbeit auf der Abgasseite der Abgasladepumpe über die Trennwand in eine Kompressionsarbeit eines Frischgasvolumens umgewandelt, der andern Orts arbeitsleistend wieder entspannt werden kann. Die Bewegungsabläufe der Trennwand lassen sich jedoch auch als mechanische Energie nutzen bzw. über einen Generator in elektrische Energie wandeln.

Eine thermisch reduzierte Belastung der Abgasladepumpe wird verfahrensbeding erreicht, indem das Abgas ausschließlich durch einen Kanal in die Primärseite der Abgasladepumpe ein- und nachfolgend wieder ausströmt. Im Gegensatz zum Abgasimpulslader, der von der kompletten Abgasmasse durchströmt wird, findet in der Abgasladepumpe im Arbeitsspiel einerseits nur ein "Verschiebemassestrom" mit wesentlich geringeren Strömungsgeschwindigkeiten (kleinere Wärmeübergangskoeffizienten) statt, und andererseits wird das aus dem Motorzylinder in der zweiten Taktphase ausgeschobene Abgas nicht durch die Abgasladepumpe geleitet.

Durch die Aufteilung des Auslasstakts in zumindest zwei Teilphasen ist somit erreicht, dass in der vorzugsweise zeitlich vergleichsweise kurz gehaltenen ersten Teilphase die gewünschte Nutzung der Abgasenthalpie vorgenommen werden kann, wobei in der zweiten, im Vergleich zur ersten vorzugsweise lang gehaltenen Teilphase die nachfolgenden Gaswechsel- und Spülvorgänge auf dem günstigen Druckniveau eines Saugmotors erfolgen können. Ein besonders hoher Wirkungsgrad bei mechanisch gering gehaltenem Aufwand ist dabei durch die ganz besonders bevorzugte Auslegung erreicht, bei der in der zweiten Teilphase das nunmehr zum Teil entspannte Abgas aus der Primärseite der Abgasladepumpe gemeinsam mit dem Rest-Abgas aus dem Brennraum ab- und der Auspuffanlage zugeführt wird. Das der Primärseite der Abgasladepumpe zugeführte Abgas wird somit in dieser Phase wieder zurückgeführt, so dass die Abgasladepumpe durch einen Stichkanal an- und später wieder abgeströmt, nicht aber durchströmt wird.

Die vorgesehene Aufteilung des Auslasstakts in mindestens zwei Teilphasen erfolgt dabei in vorteilhafter Weise derart, dass in der ersten Teilphase eine möglichst weitgehende Nutzung der Abgasenthalpie ermöglicht wird, wobei dennoch in der zweiten Teilphase zuverlässig die genannten Gaswechsel- und Spülvorgänge stattfinden können. Um dies zu gewährleisten, werden in vorteilhafter Weiterbildung die Taktphasen des Auslasstakts, d. h. die Ansteuerzeiten für die Einbringung des Abgases in die Abgasladepumpe und/oder für das Rückströmen von deren Primärseite hin zum Auspuffsystem, in der Art einer Zwangssteuerung direkt vom Motortakt gesteuert. Dies erfolgt insbesondere und besonders vorteilhaft unabhängig von individuellen Zustandsparametern der Abgasladepumpe oder ihrer Komponenten, wie beispielsweise den Druckverhältnissen in der Abgasladepumpe und/oder den Bewegungszuständen einzelner Komponenten. Ganz besonders bevorzugt ist die Ansteuerung dabei derart ausgelegt, dass die Steuerlänge oder Steuerzeit der ersten Taktphase (also für die Entspannung des Abgases in der Abgasladepumpe) etwa dem 0,1- bis 0,3-fachen der zweiten Taktphase (also für das Rückströmen des Gases aus der Primärseite der Abgasladepumpe und die mit dem Restgas im Brennraum gemeinsame Abgabe an das Auspuffsystem) entspricht.

Die dem Abgas in der Abgasladepumpe entzogene Enthalpie kann auf beliebige Weise in im Gesamtsystem des Verbrennungsmotors nutzbare Wirkleistung oder Energie umgesetzt werden, beispielsweise über hydraulische, elektrische oder ähnliche Systeme. Eine besonders günstige und vor allem flexible Nutzung der dem Abgas mittels der Abgasladepumpe entzogenen Enthalpie ist aber möglich, indem in besonders vorteilhafter Ausgestaltung in der Abgasladepumpe die Enthalpie des dieser primärseitig zugeführten Abgases ganz oder teilweise auf einen ihr sekundärseitig zugeführten Frischgasstrom übertragen wird, oder die in der Abgasladepumpe auf der Primärseite in Expansionsarbeit umgewandelte Enthalpie des Abgases ganz oder teilweise auf der Sekundärseite in Kompressionsarbeit eines zugeführten Frischgasstrom umgewandelt wird. Dabei wird vorteilhafterweise in der Abgasladepumpe der Enthalpieentzug aus dem Abgas in Kompressionsarbeit eines vom Abgasstrom hermetisch getrennten Kaltgasstroms umgewandelt. Ein komprimierter Frischgasstrom besitzt hohe Energiedichte bei geringen bewegten Massen, was dessen Eignung für hohe Arbeitsfrequenzen der Abgasladepumpe (=hohe Motordrehzahlen) unterstreicht.

Der Kaltgasstrom und/oder Frischgasstrom, der in der Abgasladepumpe durch die dort verrichtete Kompressionsarbeit verdichtet wurde, kann in einer vorteilhaften Ausgestaltung in einer vom Frischgasluftstrom der Wärmekraftmaschine oder des Verbrennungsmotors unabhängigen Ausführung einer separaten Expansionsmaschine wie beispielsweise einem Flügelzellenexpander zugeführt und dort arbeitsleistend entspannt werden. Über den in der Abgasladepumpe komprimierten Frischgas- oder Kaltgasluftstrom ist in dieser Variante die Bereitstellung eines vom Motor unabhängigen Arbeitsmediums ermöglicht, das auf flexible Weise anderwärtig als Arbeitsmedium genutzt werden kann. Beispielsweise ist denkbar, dieses Arbeitsmedium zum Antrieb eines zusätzlichen Aggregats zu nutzen, oder es kann auch eine Ankopplung der Expansionsmaschine an die Motor- oder Kurbelwelle des Verbrennungsmotors oder der Wärmekraftmaschine vorgesehen sein, so dass unmittelbar eine nutzbare Zusatzleistung des Verbrennungsmotors generiert wird.

In ganz besonders vorteilhafter Ausgestaltung ist aber vorgesehen, den Enthalpieentzug aus dem Abgas in der Abgasladepumpe zur Verrichtung von Kompressionsarbeit für den dem Brennraum des jeweiligen Zylinders zuströmenden Frischgasstrom zu verwenden. Damit wird die Abgasenthalpie unmittelbar zur Aufladung des Frischgasstroms genutzt. Um dies synchronisiert und angepasst an die Taktfolge im Verbrennungsmotor auf besonders günstige Weise umzusetzen, wird das zur Einspeisung in den Brennraum des Verbrennungsmotors vorgesehene Frischgas vorteilhafterweise zumindest teilweise der Sekundärseite der Abgasladepumpe zugeführt und dort in der genannten Weise während der ersten Teilphase des Auslasstakts durch das der Abgasladepumpe primärseitig zugeführte Abgas komprimiert und vorgespannt. Dieses komprimierte und vorgespannte Frischgas wird sodann vorteilhafterweise einem der Sekundärseite der Abgasladepumpe gasseitig nachgeschalteten Zwischenspeicher zugeführt und dort zur Einspeisung in den Brennraum des Zylinders bereitgehalten. Für das Zwischenspeichern kann dabei ein ohnehin vorhandenes Einlasskanalsystem des jeweiligen Zylinders verwendet werden, über das das Frischgas dem jeweiligen Brennraum zugeleitet wird. Die Einspeicherung des in der Abgasladepumpe vorkomprimierten und vorgespannten Frischgases erfolgt dabei vorzugsweise so lange, bis die Einlasssteuerung des jeweiligen Zylinders den jeweiligen Einlasskanal freigibt und das Frischgas in den Brennraum einströmen kann. Durch diese Ausgestaltung, bei der der in der Abgasladepumpe vorgespannte Frischgasstrom zur vollständigen oder teilweisen Versorgung der Wärmekraftmaschine mit Verbrennungsluft dient, ist erreicht, dass das in der Abgasladepumpe vorgespannte Frischgas unmittelbar über ein positives Spülgefälle Kolben- oder Expansionsarbeit direkt an der Wärmekraftmaschine leisten kann.

Bezüglich des Verbrennungsmotors wird die genannte Aufgabe gelöst, indem der Brennraum des oder jedes Zylinders jeweils einlassseitig über ein ansteuerbares Einlassventilsystem mit einem Gaseinlasssystem und auslassseitig über ein ansteuerbares Auslassventilsystem sowohl mit der Auspuffanlage als auch mit der Primärseite einer Abgasladepumpe verbunden ist.

Durch diese Ausgestaltung des Abgassystems ist erreicht, dass über eine geeignete Ansteuerung des Auslassventilsystems die vorgesehene mehrphasige Ausgestaltung des Auslasstakts vorgenommen werden kann. Hierzu sollte das Auslassventilsystem vorteilhafterweise derart ausgestaltet sein, dass während des Auslasstakts eine Umstellung der Strömungswege und damit der Betriebsweise der Abgasführung vorgenommen werden kann, wobei in einer der ersten Teilphase des Auslasstakts zugeordneten Ventilstellung die Führung des Abgasstroms zur Primärseite der Abgasladepumpe vorgesehen ist. In einer der zweiten Teilphase des Auslasstakts zugeordneten Ventilstellung des Auslassventilsystems ist hingegen die Herstellung eines gasseitigen "Kurzschlusses" vorgesehen, bei dem die Strömungswege vom Brennraum des Zylinders und von der Primärseite der Abgasladepumpe parallel und nicht in Reihe zu der Auspuffanlage freigegeben werden.

Diese in besonders vorteilhafter Ausgestaltung vorgesehene Funktionalität des Auslassventilsystems kann durch geeignet gewählte und positionierte Ventile im Abgasstrang des Verbrennungsmotors erreicht werden. Eine derartige Ausgestaltung ist beispielsweise besonders für 4-Takt-Motoren geeignet, da für diese ohnehin geeignet angesteuerte Auslassventile für die Freigabe des Abgaskanals vorgesehen sind. Für 2-Takt-Motoren kann die vorgesehene Funktionalität des Auslassventilsystems hingegen durch eine geeignete Schlitzsteuerung, also durch geeignet geführte Auslassschlitze und Überströmkanäle im Zylinder, erreicht werden. Hierbei ist vorteilhafterweise in der Zylinderwand ein vom Kolben in seiner Arbeitsbewegung zuerst überstrichener erster Auslassschlitz vorgesehen, über den das Abgas zur Primärseite der Abgasladepumpe strömen kann. Zusätzlich ist hierbei vorteilhafterweise ein bezüglich der Kolbenbewegung nachfolgender zweiter Auslassschlitz vorgesehen, der die gasseitige Verbindung zwischen dem Brennraum des Zylinders und der Auspuffanlage herstellt. Wenn der Kolben auch diesen Auslassschlitz freigegeben hat, erfolgt die gasseitige Verbindung auch der Primärseite der Abgasladepumpe mit dem Auspuffsystem mittelbar über den Brennraum des Zylinders. In dieser Ausgestaltung eines 2-Takt-Motors erfüllt somit die Kolben-Zylinder-Einheit unter Rückgriff auf die entsprechend positionierten Auslassschlitze die genannte Funktion des Auslassventilsystems.

Vorteilhafterweise ist das Auslassventilsystem hinsichtlich seiner wesentlichen Betriebsparameter derart ausgelegt, dass es in der ersten Taktphase des Auslasstakts ausschließlich eine gasseitige Verbindung zwischen dem Brennraum des jeweiligen Zylinders und der Primärseite der Abgasladepumpe freigibt, wobei die Verbindung zur Auspuffanlage gesperrt ist, und in der zweiten Taktphase des Auslasstakts die gasseitige Verbindung der Auspuffanlage sowohl mit dem Brennraum des jeweiligen Zylinders als auch mit der Primärseite der Abgasladepumpe herstellt. Ein besonderer Vorteil des vorliegenden Systems besteht darin, dass ansonsten weitere Betriebsparameter wie beispielsweise die Steuerzeiten des Vorauslasses und der Überströmkanäle eng an bekannte Auslegungen gehalten werden können, da in der Abgasladepumpe ein ähnlicher Energieaustausch zwischen Abgas und Frischgas stattfindet wie in der für Zweitaktmotoren üblichen Resonanzauspuffanlage. Damit ist auch die Kompatibilität mit bestehenden Anlagen, auch im Hinblick auf mögliche Nachrüstungen, besonders gut. Zwei wesentliche Vorteile der Abgasladepumpe gegenüber einer Resonanzauspuffanlage liegen zudem u.a. im geringeren Raumbedarf und in der Drehzahlunabhängigkeit ihrer Wirkungsweise, so dass mit einem gleichmäßigeren Drehmomentverlauf des Motors zu rechnen ist.

Vorteilhafterweise ist die Auspuffanlage des Verbrennungsmotors mit dem Brennraum des jeweiligen Zylinders über eine mit einem Absperrventil absperrbare Abgasleitung verbunden, von der in Richtung des Abgasstroms gesehen vor dem Absperrventil eine mit der Abgasladepumpe primärseitig verbundene Stichleitung abzweigt. Damit ist auf konstruktiv besonders einfach gehaltene Weise die Umsetzung der genannten Funktionalität ermöglicht. Insbesondere kann über die Stichleitung in der ersten Taktphase des Auslasstakts das Abgas aus dem Brennraum der Primärseite der Abgasladepumpe zugeführt werden, wobei in der zweiten Taktphase in der Art einer Rückströmung durch die Stichleitung das in der Primärseite der Abgasladepumpe befindliche, nunmehr entspannte Abgas über die Stichleitung wieder zur Auspuffanlage bzw. zum Brennraum zurückgeleitet werden kann. Damit ist eine Durchströmung der Primärseite der Abgasladepumpe nicht notwendig und bevorzugt auch gar nicht vorgesehen. Die Stichleitung ermöglicht somit die Beladung der Abgasladepumpe in Form eines Verschiebemassenstroms, der eine geringere thermische Bauteilbelastung der Abgasladepumpe verursacht, da gegenüber einer Durchströmung der Abgasladepumpe sowohl der Gesamtmassenstrom als auch die Wärmeübergangskoeffizienten (kleinere Gasgeschwindigkeiten) niedriger ausfallen. Die Stichleitung zur Abgasladepumpe kann dabei in der Ausgestaltung des Verbrennungsmotors als 2-Takt-Motor in der genannten Weise direkt mit dem ersten Auslassschlitz im Zylinder gasseitig verbunden sein.

In besonders vorteilhafter Ausgestaltung ist der Verbrennungsmotor für eine Nutzung der im der Abgasladepumpe zugeführten Abgas enthaltenen Abgasenthalpie zur Verrichtung von Kompressionsarbeit für einen Frischgasluftstrom ausgeführt. Dazu ist vorteilhafterweise die Abgasladepumpe sekundärseitig an eine Frischgasdruckleitung und an einen Frischgassaugkanal angeschlossen, wobei durch den Frischgassaugkanal die Sekundärseite der Abgasladepumpe mit Frischgas befüllbar ist, und wobei die Frischgasdruckleitung zur Weiterleitung und/oder Zwischenspeicherung des in der Abgasladepumpe komprimierten Frischgases vorgesehen und ausgelegt ist. Die Frischgasdruckleitung ist in einer ersten vorteilhaften Weiterbildung abströmseitig von der Abgasladepumpe mit einer Expansionsmaschine verbunden. In einer zweiten vorteilhaften Weiterbildung ist die Frischgasleitung abströmseitig von der Abgasladepumpe mit einem Zwischenspeicher für das Frischgas verbunden, der seinerseits ausgangsseitig mit dem Gaseinlasssystem des jeweiligen Zylinders verbunden ist. Damit ist eine Nutzung des in der Abgasladepumpe komprimierten oder vorgespannten Frischgases als Verbrennungsluft für den jeweiligen Zylinder ermöglicht, so dass die dem Abgas in der Abgasladepumpe entzogene Enthalpie unmittelbar über ein positives Spülgefälle zur Nutzung von Kolben- oder Expansionsarbeit direkt am Verbrennungsmotor herangezogen werden kann.

Die Abgasladepumpe, die zur Nutzung in einem derartig ausgestalteten Verbrennungsmotor vorgesehen ist, wird in ihrer Ausführung als eigenständig erfinderische Leistung angesehen. Erfindungsgemäß umfasst die Abgasladepumpe ein Druckgehäuse, dessen Innenvolumen über eine Anzahl von elastisch verformbaren Trenneinheiten in eine Mehrzahl von gasseitig voneinander getrennten Teilvolumina aufgeteilt ist, wobei die oder jede Trenneinheit derart mit einer Vorspannkraft beaufschlagt ist, dass im drucklosen Zustand das zur Verbindung mit dem Abgassystem des Verbrennungsmotors vorgesehene Teilvolumen im Rahmen der elastischen Verformbarkeit der oder jeder Trenneinheit einen Minimalwert aufweist.

Durch diese Ausgestaltung ist mit besonders einfachen Mitteln und auf besonders zuverlässige Weise erreicht, dass die Abgasenthalpie zuverlässig in Kompressionsarbeit für den zugeführten Frischgasluftstrom angezogen werden kann. Durch die Aufteilung des Druckgehäuses in vorzugsweise zwei Teilvolumina ist erreicht, dass die Expansion des primärseitigen Teilvolumens, in das das unter Druck stehende Abgas geführt wird, unmittelbar und nahezu verlustfrei zu einer entsprechenden Kompression des zweiten Teilvolumen führt, da sich auf Grund des gemeinsamen Druckgehäuses die Summe der Teilvolumina nicht ändern kann. Die Expansion des Abgases im ersten Teilvolumen führt somit unmittelbar und vollständig zu einer entsprechenden Kompression des sich im zweiten Teilvolumen befindlichen Frischgases. Durch die Beaufschlagung der Trenneinheit mit einer Vorspannkraft ist dabei sichergestellt, dass im drucklosen Zustand das erste, für die Aufnahme des Abgases vorgesehene Teilvolumen minimal, im Idealfall nahezu bei Null gehalten werden kann, so dass Totvolumina zumindest in der Abgasladepumpe besonders gering gehalten werden können.

Die Trenneinheit der Abgasladepumpe kann dabei grundsätzlich in verschiedenen Varianten unter Einhaltung der genannten Randbedingungen ausgeführt sein. Beispielsweise könnte die Trenneinheit als Faltenbalg oder als im Druckgehäuse geführter Kolben ausgeführt sein, wobei jeweils ein Federelement zur Vorspannung und Rückstellung vorgesehen sein könnte. Die Ausgestaltung als Faltenbalg bietet unter diesen Varianten den Vorteil gegenüber dem Kolben, dass Undichtigkeiten und ein gasseitiges Überströmen zwischen den Teilvolumina sicher ausgeschlossen werden können. Im Hinblick auf eine besonders einfach gehaltene und robuste Ausführung ist jedoch in besonders vorteilhafter Ausgestaltung vorgesehen, dass die Abgasladepumpe als Membranpumpe ausgeführt ist. Die Trenneinheit stellt dabei die Membran der Membranpumpe dar.

Ein insbesondere zur Verwendung als Absperrventil für die Abgasleitung in einem derartig ausgestalteten Verbrennungsmotor vorgesehenes Absperrventil wird ebenfalls als eigenständig erfinderische Leistung angesehen. Dieses eigenständig erfinderische Absperrventil umfasst ein Absperrorgan oder einen Absperrkörper, der als rotierender Drehschieber ausgeführt ist, und dessen Rotationsachse im wesentlichen parallel zur Durchströmungsrichtung des abzusperrenden Medienstroms ausgeführt ist. Bezüglich der Rotationsachse des Drehschiebers ergibt sich somit eine axiale Durchströmungsrichtung für den durchgeleiteten Abgasstrom, so dass auch bei einer Veränderung der Druckverhältnisse im Abgasstrang und/oder bei einer Veränderung der Stellung des Absperrorgans nicht mit Asymmetrien, beispielsweise durch radiale Durchbiegungen, hinsichtlich der druckseitigen Belastung der Komponenten gerechnet werden muss. Insbesondere zeigt eine solche Drehschieberanordnung mit axialer Steuerfläche, in Verbindung mit berührungslosen Dichtspalten, das vorteilhafte Verhalten eines sich tendenziell vergrößernden Dichtspalts unter Druckbelastung, womit Bauteilberührungen leichter vermieden werden können, als bei radial belasteten Drehschiebern, deren Durchbiegung unter Druck immer zu einer partiellen Dichtspaltverringerung führt. Ein solches Absperrventil ist somit besonders unempfindlich gegenüber Verkantungen oder dergleichen selbst bei auftretenden Druckschlägen, so dass eine besonders hohe mechanische Stabilität und damit Lebensdauer dieser Komponenten erreichbar ist.

Das Absperrventil ist dabei derart ausgeführt, dass axiale Stirnflächen und/oder radiale Umfangsflächen des Drehschiebers durch Aussparungen mit korrespondierenden, im Gehäuse bzw. Zylinderkopf angeordneten Kanälen die Kanalöffnungen der Abgasleitung und/oder der Frischgasdruckleitung steuern. Die Abdichtung des Drehschiebers zum Gehäuse bzw. Zylinderkopf erfolgt dabei besonders bevorzugt über vergleichsweise eng ausgeführte Dichtspalte.

Die mit der Erfindung erzielten Vorteile bestehen insbesondere darin, dass durch die auf die erste Teilphase des Auslasstakts beschränkte Einspeisung des aus dem Zylinder abströmenden Abgases als Primär- oder Antriebsmedium in die Abgasladepumpe und die anschließend vorgesehene Ableitung des restlichen Abgases ebenso wie des auf der Primärseite der Abgasladepumpe zumindest teilweise entspannten Abgases in die Auspuffanlage eine weitreichende und zuverlässige Nutzung des Druckgefälles der Abgasenthalpie zur Wirkungsgrad- oder Leistungssteigerung des Verbrennungsmotors ermöglicht ist. Die schnelle Entspannung mit Beginn der zweiten Taktphase ermöglicht, ähnlich einem Saugmotor, geringe Gaswechselverluste. Dies ist mit apparativ gering gehaltenem Aufwand und mit hoher Zuverlässigkeit möglich.

Des Weiteren weist ein nach dem genannten Konzept ausgelegter Verbrennungsmotor folgende vorteilhaften Eigenschaften auf:
- Es können diskontinuierliche Abgasenthalpieströme, wie sie beispielsweise bei Einzylindermotoren auftreten, zuverlässig in Kompressionsarbeit eines Kaltgasstroms umgewandelt werden.
- Das Konzept ist insbesondere auch für Kleinmotoren (beispielsweise mit Hubräumen ≤ 250ccm) und entsprechende geringe Abgasströme geeignet.
- Es ist ein sehr gutes Instationärverhalten, gerade auch in Teillastbereichen, (z.B. für Fahrzeugmotoren) erreichbar.
- Die Fördercharakteristik des Kaltgasstroms verläuft etwa proportional zur Motordrehzahl. - Es ist eine hermetische Trennung von Abgas und Frischgas möglich.
- Es wird lediglich ein vergleichsweise geringer Abgasgegendruck hervorgerufen.
- Es wird lediglich eine geringe Eigenverlustleistung erzeugt.
- Die Systemkosten sind aufgrund der einfachen Bauweise und des an sich passiv auslegbaren Steuersystems vergleichsweise gering.
- Die Anbindbarkeit an bestehende Motorenkonzepte ist gegeben.
- Es ist ein gutes akustisches Verhalten erreichbar.
- Das Konzept ist sowohl für Otto- und Dieselmotoren als auch für im Vier- bzw. Zweitaktarbeitsverfahren arbeitende Verbrennungskraftmaschinen anwendbar.

Ein solchermaßen ausgerüsteter Verbrennungsmotor kann insbesondere als Hubraum- kleiner Einzylinder-Verbrennungsmotor ausgelegt sein, bei dem ein hoher Wirkungsgrad erreichbar ist. Solche Motoren, die in der Regel als frei saugende Viertakt-Ottomotoren ausgeführt sind, werden weltweit in großen Stückzahlen beispielsweise für Zweiräder (50-250ccm Hubraum), Industriemotoren (auch Dieselmotoren) für Stromerzeuger, Pumpen etc. und (Mini)-Blockheizkraftwerke hergestellt.

Ein Ausführungsbeispiel der Erfindung wird anhand einer Zeichnung näher erläutert. Darin zeigen:
- Fig. 1: schematisch einen Verbrennungsmotor,
- Fig. 2,3: jeweils schematisch eine alternative Ausführungsform eines Verbrennungsmotors,
- Fig. 4: schematisch einen Zweitakt-Verbrennungsmotor,
- Fig. 5: eine weitere alternative Ausführungsform eines Verbrennungsmotors,
- Fig. 6: eine Abgasladepumpe im Querschnitt,
- Fig. 7: eine alternative Ausführung einer Abgasladepumpe im Querschnitt,
- Fig. 8 - 15: jeweils einen Ausschnitt aus der Querschnittsdarstellung gem. Fig. 6 in unterschiedlichen Alternativen, und
- Fig. 16 - 19: jeweils ein Absperrventil, insbesondere zur Verwendung ein einem Verbrennungsmotor gem. Fig. 1 -5.

Gleiche Teile sind in allen Figuren mit denselben Bezugszeichen versehen.

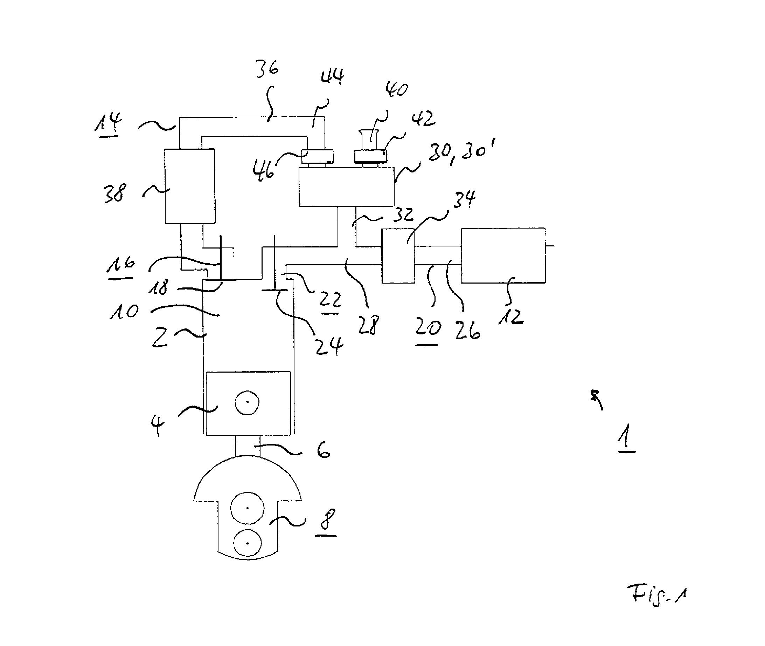

Der in Fig. 1 schematisch dargestellte Verbrennungsmotor 1 ist nach dem 4-TaktVerfahren ausgelegt. Er umfasst eine Anzahl von Zylindern 2, von denen in Fig. 1 lediglich einer dargestellt ist, und in denen jeweils ein Arbeitskolben 4 geführt ist. Der Arbeitskolben 4 wirkt über ein Pleuel 6 auf eine Kurbelwelle 8. Je nach Auslegung und Bauart des Verbrennungsmotors 1 können dabei auch der oder die Arbeitskolben 4 mehrerer oder aller Zylinder 2 auf eine gemeinsame Kurbelwelle 8 wirken.

Innerhalb des Zylinders 2 befindet sich in herkömmlicher Bauweise der Brennraum 10, in dem im Arbeitstakt des Zylinders 2 ein komprimiertes Brennstoff-Luft-Gemisch zur Explosion gebracht wird. In Reaktion hierauf führt der im Zylinder 2 verschiebbar angeordnete Arbeitskolben 4 einen Arbeitshub aus, wobei er die Kurbelwelle 8 arbeitsleistend antreibt. Nach der Vollendung des Arbeitshubs, also nach vollständiger Expansion des verbrannten Arbeitsgases im Zylinder 2 und bei Erreichen des so genannten "unteren Totpunkts" (UT), wird das verbrannte Arbeitsgas als Abgas während eines Auslasstakts des Zylinders 2 einer auslassseitig an diesen angeschlossenen Auspuffanlage 12 zugeführt.

Für die zum Betrieb des Zylinders 2 erforderlichen Gaswechsel ist der Brennraum 10 gaseinlassseitig mit einem Gaseinlasssystem 14 und auslassseitig mit der Auspuffanlage 12 verbunden. Zur Steuerung der Gaswechsel im Brennraum 10 ist dabei der Brennraum 10 einerseits gegenüber dem Gaseinlasssystem 14 mittels eines Einlassventilsystems 16 absperrbar, das im Ausführungsbeispiel gem. Fig. 1 als Einlassventil 18 ausgeführt ist. Andererseits ist der Brennraum 10 gegenüber dem zur Auspuffanlage 12 führenden Abgasstrang 20 mittels eines Auslassventilsystems 22 absperrbar, das im Ausführungsbeispiel gem. Fig. 1 als Auslassventil 24 ausgeführt ist.

Der Verbrennungsmotor 1 ist gezielt für eine besonders hohe spezifische Leistungsausbeute und/oder einen besonders hohen Wirkungsgrad und damit geringen spezifischen Kraftstoffverbrauch ausgelegt. Dazu ist vorgesehen, dem aus dem Brennraum 10 während des Auslasstakts des jeweiligen Zylinders 2 abströmenden heißen Abgas zumindest einen Teil der ansonsten eigentlich ungenutzten Abgasenthalpie zu entziehen, um diese in den Wirkungsgrad steigernder Weise in mechanische Antriebsenergie und/oder Erhöhung der Frischgasluftdichte im Sinne einer Aufladung umzuwandeln. Um dies zu ermöglichen, ist der Abgasstrang 20 verzweigt ausgeführt, wobei von der zur Auspuffanlage 12 führenden Abgasleitung 26 an einer Verzweigungsstelle 28 eine zur Primärseite einer Abgasladepumpe 30 führende Stichleitung 32 abzweigt. Der Brennraum 10 ist somit auslassseitig über das Auslassventilsystem 22 sowohl mit der Auspuffanlage 12 als auch mit der Primärseite der Abgasladepumpe 30 verbunden.

Um dabei eine besonders bevorzugte, nachfolgend noch näher erläuterte gezielte Steuerung der Abgasströme zu ermöglichen, ist in die Abgasleitung 26 an einer in Strömungsrichtung des Abgases gesehen nach der Verzweigungsstelle 28 gelegenen Position ein Absperrventil 34 geschaltet.

Im Ausführungsbeispiel gem. Fig. 1 ist die Nutzung der in der Abgasladepumpe 30 dem Abgas entzogenen Enthalpie zur Kompression und damit Vorspannung eines der Abgasladepumpe 30 sekundärseitig zugeführten Kaltgasstroms, nämlich in diesem Ausführungsbeispiel dem zur Einspeisung in den Brennraum 10 vorgesehenen Frischgasluftstrom, vorgesehen. Dementsprechend ist im Ausführungsbeispiel gem. Fig. 1 die Abgasladepumpe 30 sekundärseitig in eine Frischgasleitung 36 geschaltet, die über einen Ladeluftkühler 38 geführt ist und ausgangsseitig über das Einlassventilsystem 16 mit dem Brennraum 10 des Zylinders 2 absperrbar verbunden ist.

Im Ausführungsbeispiel gem. Fig.1 ist der Zylinder 2 des Verbrennungsmotors 1 in dem Moment gezeigt, in dem der Arbeitskolben 4 sich im unteren Totpunkt (UT) befindet und der Auslasstakt des Zylinders 2 beginnt. Das Auslassventil 24 hat begonnen, sich zu öffnen, und Abgas strömt in die Abgasleitung 26, die sich verzweigt, mit einem Strang zum Absperrventil 34 führt und mit dem anderen Strang zur Abgasladepumpe 30. Das Absperrventil 34 verschließt ca. 20-60°KW (= Grad Kurbelwelle) nach Öffnen des Auslassventils 24 die Abgasleitung 26 zum Auspuff 12 oder Schalldämpfer, der das Abgas ins Freie entlässt. Während dieser Zeit, also der ersten Taktphase des Auslasstakts, in der das Auslassventil 24 geöffnet und das Absperrventil 34 geschlossen ist, strömt das heiße Abgas ausschließlich durch die Stichleitung 32 zur Abgasladepumpe 30, wo es arbeitsleistend entspannt wird.

In der Abgasladepumpe 30 wird die Expansionsarbeit des Abgases in Kompressionsenergie des in der Frischgasleitung 36 geführten Frischgases umgewandelt. Dazu kann die Abgasladepumpe 30 geeignet ausgeführt sein, beispielsweise als Faltenbalg-Pumpe oder dergleichen. Im Ausführungsbeispiel ist aber die als besonders vorteilhaft und eigenständig erfinderisch angesehene Ausführung der Abgasladepumpe 30 als Membranpumpe vorgesehen. In dieser entspannt sich das Abgas durch Verformung einer Membran, die die beiden Volumina von Abgas und Frischgas gasdicht voneinander trennt. Im druckfreien Zustand nimmt das Volumen auf der Abgas- oder Primärseite der Abgasladepumpe 30 sein Minimum ein, und das Volumen auf der Frischgasseite entsprechend sein Maximum. Die äußerst geringe Masse der Membran ermöglicht eine sehr schnelle Volumenänderung in der Abgasladepumpe 30 und dem entsprechend eine unverzügliche Entspannung des Abgases innerhalb weniger Grad Kurbelwelle, so dass die hierfür vorgesehene erste Taktphase des Auslasstakts entsprechend kurz gehalten werden kann.

Anschließend folgt die zweite Taktphase des Auslasstakts, in der das noch in der Primärseite der Abgasladepumpe 30 befindliche, dort nunmehr vorentspannte Abgas gemeinsam mit dem sich gegebenenfalls noch im Brennraum 10 des Zylinders 2 befindlichem restlichen Abgas zur Auspuffanlage 12 geleitet wird. Hierzu wird - taktgerecht nach der vorgesehenen Entspannung des Abgases in der Primärseite der Abgasladepumpe 30 - das Absperrventil 34 geöffnet, so dass sowohl die Primärseite der Abgasladepumpe 30 als auch der Brennraum 10 gasseitig mit der Auspuffanlage verbunden werden. Aufgrund der schnellen Reaktionsfähigkeit der als Membranpumpe ausgeführten Abgasladepumpe 30 kann dieser Beginn der zweiten Taktphase des Auslasstakts bei den heute üblichen Steuerzeiten von Verbrennungsmotoren vergleichsweise frühzeitig erfolgen, so dass das Absperrventil 34 bereits im Bereich vor dem unteren Totpunkt (=UT) des Motorkolbens die Abgasleitung 26 zum Schalldämpfer oder zur Auspuffanlage 12 öffnet und sich der Abgasrestdruck im Zylinder 2 schnell entspannen kann.

Der Abgasgegendruck, der eine Verlustarbeit im Ausschiebetakt darstellt, liegt daher vorteilhafterweise auf ähnlich niedrigem Niveau eines Saugmotors im Gegensatz zu Motoren mit Turboladern (Staudruck vor Turbine), Abgasimpulsladern und 5-Taktmotoren. Auch verringert sich durch niedrigen Abgasgegendruck die Gefahr eines negativen Spülgefälles bei nachfolgender Ventilüberschneidung. Um ein hohes Expansionsverhältnis von Abgas in der Abgasladepumpe 30 zu erreichen, ist neben deren geometrisch vorgegebenem Hubvolumen der Membran besonders wichtig, das "Schadvolumen" in der Abgasleitung 26, das den kompletten Kanalinhalt zwischen Auslassventil 24, Absperrventil 34 und dem Abgaseintritt der Abgasladepumpe 30 beschreibt, möglichst klein zu halten. Das Entspannen des Abgases in der Abgasleitung 26 stellt nämlich einen an sich unerwünschten Enthalpieverlust dar, der mit einem Druckabfall ohne Verrichtung von Arbeit verbunden ist und umso geringer ausfällt, je kleiner das "Schadvolumen" in der Abgasleitung 26 ausgeführt ist.

Die Phasenbeziehung zwischen dem Öffnen des Auslassventils 24 und dem Öffnen des Absperrventils 34 kann in vorteilhafter Weiterbildung mittels Phasenstellern variabel ausgeführt sein, um beispielsweise je nach Motorlast bzw. -drehzahl der Abgasladepumpe 30 gerade genügend Zeit zu geben, den gewünschten Membranhub auszuführen, aber auch möglichst früh im Ausschiebetakt die Entspannungsphase des Abgases in den Schalldämpfer oder Auspuff 12 einzuleiten.

Die Funktion des Absperrventils 34 kann in einer Variante der Erfindung durch ein weiteres Motorauslassventil übernommen werden, unter der Voraussetzung, dass die Motorauslassventile in voneinander getrennte Auslass-Teilkanäle münden. Die beiden Motorauslassventile öffnen hierbei phasenversetzt. Das zuerst öffnende Ventil ist über seinen Auslasskanal mit der Abgasladepumpe 30 verbunden, so dass das aus dem Motor ausströmende Abgas sich an der Membran der Abgasladepumpe 30 entspannt. Das später öffnende zweite Ventil entlässt das Abgas aus dem Motorzylinder direkt in die Schalldämpferanlage und sorgt in Verbindung mit dem bereits geöffneten ersten Ventil dafür, dass das Abgas in der Abgasladepumpe 30 über den ersten Auslasskanal zurück in den Motorzylinder strömt und sich über das zweite Ventil ebenfalls in die Schalldämpferanlage entspannt.

Die Frischgasleitung 36, in die die Abgasladepumpe 30 sekundärseitig geschaltet ist, umfasst einen Frischgassaugkanal 40, der mit einem Ventil 42 versehen ist, welches ausschließlich das Einströmen von Frischgas in die Sekundärseite der Abgasladepumpe 30 gestattet und ein Rückströmen unterbindet. Das Ventil 42 kann dementsprechend beispielsweise als Flatterventil ausgeführt sein. Auf der Frischgas- oder Sekundärseite der Abgasladepumpe 30 befindet sich als weiterer Bestandteil der Frischgasleitung 36 ein Frischgasdruckkanal 44, in den das von der Membran in der Abgasladepumpe 30 komprimierte Frischgas aus dieser verdrängt wird. Um ein Rückströmen des komprimierten Frischgases in die Abgasladepumpe 30 zu verhindern, ist der Frischgasdruckkanal 44 ebenfalls mit einem Ventil 46 versehen, das ausschließlich ein Ausströmen aus der Abgasladepumpe 30 in den Frischgasdruckkanal 44 gestattet, ein Rückströmen aber verhindert. Die Ventile 42,46 können vorteilhaft als selbstregelnde Rückschlagventile (Zungenventile) ausgeführt sein.

Um ein besonders hohes Kompressionsverhältnis auf der Frischgas- oder Sekundärseite der Abgasladepumpe 30 zu erreichen, befinden sich die Ventile 42,46 in besonders bevorzugter Ausgestaltung so nahe wie möglich am Kompressionsraum der Abgasladepumpe 30, um die Schadvolumina, die sich jeweils zwischen den Ventilen 42,46 und dem Kompressionsraum der Membran befinden, möglichst klein zu halten.

Der Frischgasdruckkanal 44 ist im Ausführungsbeispiel mit dem Ladeluftkühler 38 versehen, der das komprimierte Frischgas abkühlt. Alternativ kann die frischgasseitige Gehäusehälfte der Abgasladepumpe 30 bzw. die Leitungsführung für den Frischgasdruckkanal 44 selbst als Wärmetauscher (Kühler) ausgeführt sein.

Sobald sich das Abgas in der Abgasladepumpe 30 genügend entspannt hat und das Abgasventil 34 öffnet, wird die Membran der Abgasladepumpe 30 mit Unterstützung einer Rückstellfeder in ihre Ruheposition bewegt, wobei das restliche Abgas aus der Abgasladepumpe 30 ausgeschoben und gleichzeitig Frischgas über den Frischgassaugkanal 40 von der Abgasladepumpe 30 angesaugt wird. Das Arbeitsspiel der Abgasladepumpe 30 kann nun von neuem beginnen. Die Fördercharakteristik der Frischgasseite ist bei ausreichend bemessenen Fließquerschnitten der Ventile 42,46 und Kanäle etwa proportional zur Arbeitsfrequenz der Abgasladepumpe 30 bzw. der Motordrehzahl. Prinzipiell kann eine Abgasladepumpe 30 auch mit mehreren Motorzylindern betrieben werden, unter der Voraussetzung, dass hinsichtlich der Zündfolge der Motorzylinder keine Überschneidung der Spülphasen in der Abgasladepumpe stattfinden.

Das von der Abgasladepumpe 30 komprimierte Frischgas, das sich nun im Frischgasdruckkanal 44 befindet, kann nun in unterschiedlichen Anwendungen zur Effizienzsteigerung genutzt werden:

### 1. Verfahren für positives Spülgefälle (Verbrauchsreduzierung)

Entsprechend dem in Fig.1 gezeigten Ausführungsbeispiel wird das aus der Abgasladepumpe 30 abströmende komprimierte Frischgas durch den Frischgasdruckkanal 44 zum Einlassventil 18 des Motors geleitet. Der Ladeluftkühler 38 kann wahlweise vorhanden sein. Das komprimierte Frischgas verweilt nach seiner Kompression in der Abgasladepumpe 30, also nach der ersten Taktphase des Auslasstakts, vorübergehend im Bereich des UT des Arbeitskolbens 4 über etwa 180°KW bis zum Ladungswechsel im oberen Totpunkt (OT), bei dem das Einlassventil 18 geöffnet wird, im Frischgasdruckkanal 44 einschließlich Ladeluftkühler 38. Der Frischgaskanal 44 wird somit in dieser Phase als Zwischenspeicher für das komprimierte Frischgas genutzt. Beim Öffnen des Einlassventils 18 strömt das Frischgas - anfangs unter Kompressionsdruck - in den Brennraum 10 des Zylinders 2 und entspannt sich dort bei abwärts gehendem Arbeitskolben 4 bis zum UT, womit auch eine Abkühlung (Expansionkühlung) des Frischgases einhergeht. Auf Grund des ausgeprägten positiven Spülgefälles wird während der Zylinderfüllung eine signifikante positive Arbeit am Arbeitskolben 4 geleistet, anstatt, wie bei Saugmotoren üblich, eine negative Saugarbeit während des Ansaughubs aufbringen zu müssen. Ist der Frischgasförderstrom der Abgasladepumpe 30 so groß wie das Schluckvermögen des Saugmotors, tritt keine Erhöhung des Liefergrads der Verbrennungsluft ein, womit die Motorleistung gegenüber der Ausführung als Saugmotor unverändert bleibt.

Die Höhe der zur Verfügung stehenden Abgasenthalpie, das Verhältnis des Motorhubvolumens zum Fördervolumen der Abgasladepumpe 30 und das Speichervolumen des als Zwischenspeicher vorgesehenen Frischgasdruckkanals 44 einschließlich des Ladeluftkühlers sind in besonders vorteilhafter Ausgestaltung individuell aufeinander abgestimmt. Tendenziell kann bei einem hohen Abgasenthalpieangebot (z.B. niedrig verdichtete Motoren) ein großes Förderhubvolumen der Abgasladepumpe mit einem vergleichsweise kleinen Speichervolumen des Frischgasdruckkanals 44 kombiniert werden, womit ein entsprechend großer Enthalpieentzug im Abgas nicht in eine Steigerung des Luftaufwands, sondern in eine Erhöhung des Kompressionsenddrucks im Frischgasdruckkanal 44 umgesetzt wird. Die Abgasladepumpe 30 wird in diesem Fall (konstanter Luftaufwand, höherer Kompressionsdruck) näher an ihrer Pumpgrenze betrieben. Folgerichtig wäre insbesondere im Teillastbetrieb des Verbrennungsmotors 1 eine Verkleinerung des Speichervolumens im Frischgasdruckkanal 44 sinnvoll, da in diesen Lastbereichen zumindest der Ottomotor fast ausschließlich luftmengenggeregelt betrieben wird. Ein variables Speichervolumen kann beispielsweise und in vorteilhafter Ausgestaltung durch mehrere Leitungsstränge, die individuell absperrbar sind, erreicht werden oder durch variable Volumina in Leitungskomponenten, die mittels verschiebbaren Einbauten (z.B.: verschiebbare Kolben-Zylindereinheiten) ihr Fassungsvermögen veränderlich gestalten lassen.

Eine Luftmengenreduzierung für den Teillastbetrieb von Ottomotoren, ohne Wirkungsgrad mindernde Drosselung der Abgasladepumpen-Frischgaszuführung, kann auch durch vorzeitiges Beenden der Frischgaszufuhr (Miller-Verfahren) in den Motor während des Saughubs erfolgen. Ventiltriebe mit variablem Einlassschluss, Lufttaktventile etc. können diese Aufgabe übernehmen.

Wegen des grundsätzlich erhöhten Spüldrucks von Frischgas im Ladungswechsel-OT (= LWOT) kann die Ventilüberschneidungsphase des Motors gegenüber einem Betrieb ohne Abgasladepumpe 30 wesentlich in den notwendigen Zeitquerschnitten verringert werden. Ein unerwünschtes Zurückschieben von Abgas (negatives Spülgefälle) in den Einlassbereich des Motors wird vor allem auch bei Teillast verhindert bzw. stark reduziert.

### 2. Verfahren für positives Spülgefälle und Aufladung (Verbrauchsreduzierung und Leistungssteigerung)

Dieses Verfahren ist mit dem vorstehend beschriebenen Verfahren ( positives Spülgefälle) vom Systemaufbau und Betriebsmodus her weitegehend identisch, wird jedoch in eigenständig erfinderischer Ausgestaltung mit einer Abgasladepumpe 30 betrieben, die ein vergleichsweise größeres Frischgasfördervolumen besitzt, als es das Schluckvermögen des Verbrennungsmotors 1 darstellt. Der höhere Luftaufwand der Abgasladepumpe 30 führt zu einem höheren Liefergrad an Frischgas im Motor, da im Bereich des UT am Ende von dessen Ansaugtakt noch ein Überdruck im Frischgasdruckkanal 44 vorherrscht und dieser mit einer Ladungsdichtesteigerung einhergeht. Neben dem über den gesamten Ansaughub positiven Spülgefälle, das eine positive Kolbenarbeit indiziert, wird somit auch eine Drehmoment- bzw. Leistungssteigerung durch Ladungsdichteerhöhung herbeigeführt. Ist nun beabsichtigt, die Leistung des Motors unverändert zu belassen, so kann dieses Verfahren mit einer Hubraumverkleinerung (down-sizing) des Motors kombiniert werden, womit sich geringere Wandwärmeverluste, Reibung und Gewicht verbrauchsreduzierend auswirken.

### 3. Verfahren für ausschließliche Aufladung (Drehmoment- bzw. Leistungssteigerung)

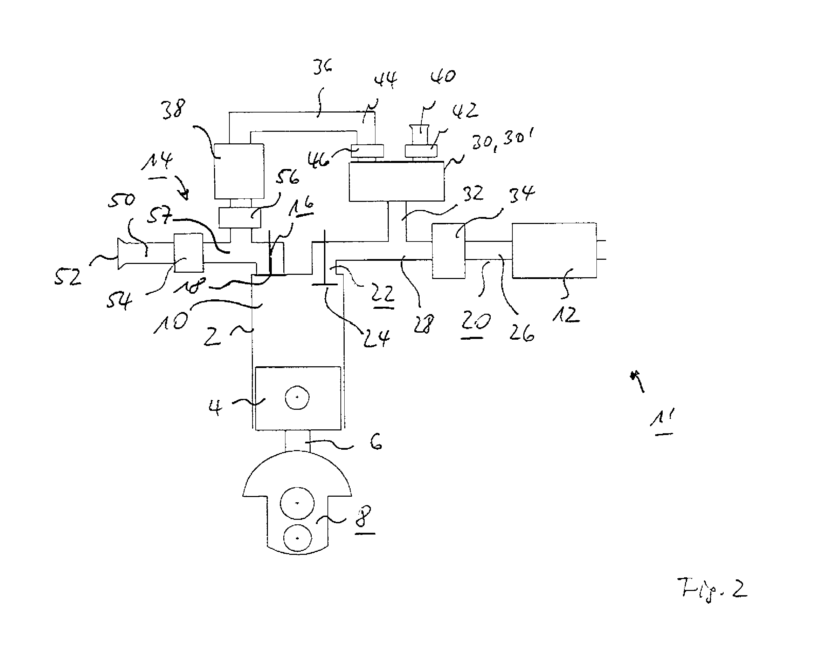

In der alternativen und als eigenständig erfinderisch angesehenen Ausführung des Verbrennungsmotors 1', wie sie schematisch in Fig.2 gezeigt ist, ist die Abgasladepumpe 30 ausschließlich zur Aufladung (Dichtesteigerung der Frischgasladung) vorgesehen. Der vornehmliche Unterschied zu der vorstehend erläuterten Alternative ist in der Auslegung der Frischgasversorgung des Verbrennungsmotors 1' zu sehen. Der Frischgasdruckkanal 44 mündet hierbei in den eigentlichen Motoreinlasskanal 50, der seinerseits ausgangsseitig über das Einlassventil 18 absperrbar in den Brennraum 10 mündet, und der zudem eingangsseitig noch eine Anbindung zur Atmosphärenluftversorgung 52 (Luftfilter), wie bei Saugmotoren üblich, besitzt. Im Motoreinlasskanal 50 ist dabei in Einströmrichtung des Gases gesehen vor der Einmündungsstelle des Frischgasdruckkanals 44 und besonders bevorzugt möglichst nahe am Einlassventil 18 ein Ventil 54 angeordnet, das in der Art eines Rückschlagventils ausgeführt ist ausschließlich eine Gasströmung in den Zylinder 2 hinein, nicht aber in Rückwärtsrichtung, gestattet. Das Ventil 54 ist vorteilhafterweise als selbstregelndes Rückschlagventil (Zungenventil) ausgeführt.

Der Frischgasdruckkanal 44 ist dabei seinerseits über ein steuerbares Frischgasventil 56 mit dem Motoreinlasskanal 50 verbunden, wobei das Frischgasventil 56 die aus der Abgasladepumpe 30 komprimierte Luft ausschließlich in den Kanalabschnitt 57 nach dem Ventil 54 entlässt. Der Kanalabschnitt 57 dient somit als Zwischenspeicher für die aus der Abgasladepumpe 30 abströmende komprimierte Luft. Das Frischgasventil 56 ist besonders bevorzugt möglichst nahe am Einlassventil 18 positioniert. Konstruktiv können das Frischgasventil 56 und das Absperrventil 34 in einem Bauteil zusammengefasst sein.

Der Ladungswechsel in der Abgasladepumpe 30 vollzieht sich bei dieser Variante ebenso wie in den vorstehend erläuterten Verfahren. Im Frischgasdruckkanal 44 wird das nahe dem UT des Motors komprimierte Frischgas zwischengespeichert, solange das Frischgasventil 56 geschlossen bleibt. Beginnt nun nach LWOT die Ansaugphase des Motors, so wird wie bei einem konventionellen Saugmotor atmosphärische Luft über das Ventil 54 und den Motoreinlasskanal 50 in den Brennraum 10 des Zylinders 2 gesaugt, bis im Bereich des LWUT kein nennenswerter Luftdurchsatz aus der Atmosphäre mehr stattfindet. Zu diesem Zeitpunkt öffnet das Frischgasventil 56, und die komprimierte Luft aus dem Frischgasdruckkanal 44 strömt in den Kanalabschnitt 57 nach dem Ventil 54. Mit dem damit einhergehenden Druckanstieg schließt das Rückschlagventil 54, und komprimierte Luft strömt ausschließlich in den Zylinder 2, bis dieser mit dem Kanalabschnitt 57 und dem Frischgasdruckkanal 44 im Druckausgleich steht oder das schließende Einlassventil 18 eine weitere Strömung unterbindet.

In vorteilhafter Ausgestaltung ist das Volumen des Kanalabschnitts 57 nach dem Ventil 54 vergleichsweise klein gehalten, besonders bevorzugt etwa bei 10-20% des Motorhubvolumens, um bei ausreichendem Spülvolumen im LWOT einen möglichst geringen Druckabfall in der Aufladungsphase am Einlassende zu verursachen. Der Druck des gespeicherten "Luftpolsters" im Einlasskanalbereich bei Einlassschluss baut sich auf Grund des geringen Speichervolumens im nächsten Spülvorgang schnell ab und indiziert daher nur geringe positive Kolbenarbeit.

Das Frischgasventil 56 schließt, wenn das Einlassventil 18 geschlossen ist, und bleibt geschlossen bis zum Ende der folgenden Ansaugphase.

Ein sukzessiv früheres Öffnen des Frischgasventils 56 in die Saugphase des Motors hinein, lässt dieses Verfahren für ausschließliche Aufladung schrittweise in das Verfahren für positives Spülgefälle und Aufladung (Verbrauchsreduzierung und Leistungssteigerung) übergehen. In einer besonders vorteilhaften Ausgestaltung sind die Öffnungs- und Schließzeitpunkte des Frischgasventils 56 variabel einstellbar. Damit kann auf besonders einfache Weise und mit hohem Wirkungsgrad eine Laststeuerung hinsichtlich der Luftmenge vorgenommen werden.

Da in der Nähe des LWUTs kaum Kolbenbewegung stattfindet, wird durch den Druckanstieg im Zylinder auch keine wesentliche Kolbenarbeit geleistet bzw. absorbiert.

Prinzip bedingt verbleibt das Frischgas im Kanalabschnitt 57 auf dem Druckniveau, das am Ende der vorhergehenden Ansaugphase bei Einlassschluss anlag. Insbesondere bei hohen Lasten stellt sich hier ein beträchtlicher Überdruck ein, der bei nachfolgender Ventilüberschneidung im LWOT eine effektive Restgasausspülung ermöglicht und damit die Motorleistung positiv beeinflusst.

Dieses Aufladeverfahren nutzt die in der Abgasladepumpe 30 umgewandelte Abgasenthalpie soweit wie möglich zur Ladungsdichtesteigerung (Leistungssteigerung) und ist daher insbesondere für Motoren geeignet, die konstruktiv oder physikalisch weder über eine Hubraum- noch eine Drehzahlsteigerung in ihrer Leistung angehoben werden können.

Da nur ein Teil der vom Motor benötigten Frischluftmenge durch die Abgasladepumpe 30 komprimiert werden muss, lassen sich die Abgasladepumpe 30 und ebenso auch die Komponenten zur Ladeluftkühlung kleiner dimensionieren als eine es eine Auslegung für den gesamten Luftdurchsatz des Verbrennungsmotors 1 erfordern würde. Die geringeren Bauteilabmessungen und einhergehenden Gewichtsreduzierungen dieser Komponenten kommen insbesondere in Gewichts- und Bauraum-optimierten Fahrzeug- oder auch Flugmotoren vorteilhaft zur Geltung.

### 4. Verfahren zum Antrieb einer separaten Expansionsmaschine

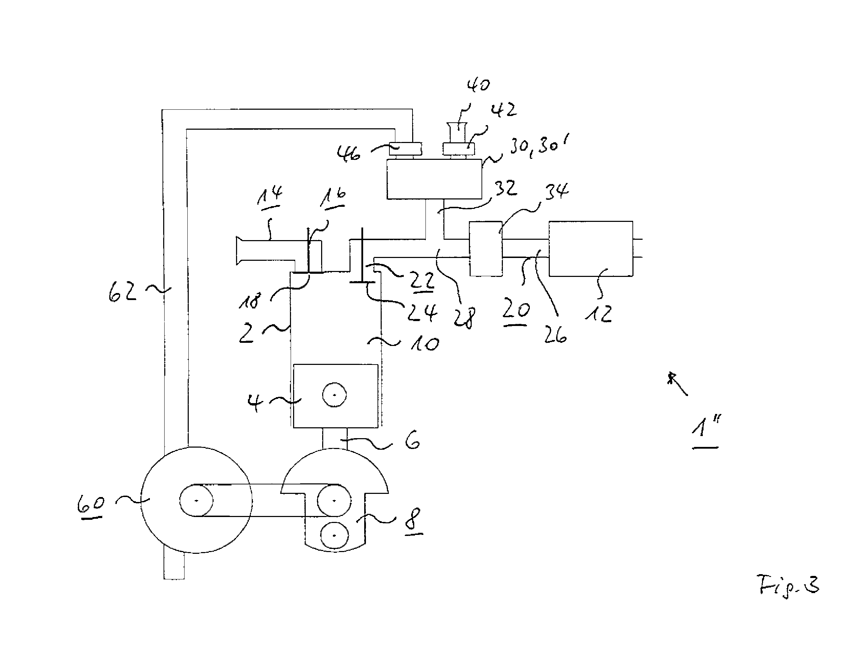

In einer alternativen besonders bevorzugten Ausführungsform, wie sie beispielhaft in Fig.3 gezeigt ist, wird die in der Abgasladepumpe 30 dem Abgas entzogene Enthalpie zum Antrieb einer separaten Expansionsmaschine 60 genutzt. Dementsprechend wird das in der Abgasladepumpe 30 enthalpieseitig aufgeladene Frischgas in dieser eigenständig erfinderischen Variante in der Expansionsmaschine 60 arbeitsleistend entspannt. Die schematische Darstellung des alternativen Verbrennungsmotors 1'' in Fig. 3 zeigt, wie das von der Abgasladepumpe 30 erzeugte komprimierte Frischgas nicht dem Verbrennungszyklus des Verbrennungsmotors 1'' zugeführt wird, sondern in der separaten Expansionsmaschine 60, beispielsweise einem Druckluftmotor, entspannt und dabei in mechanische Arbeit umgewandelt wird. Die Expansionsmaschine 60 kann beispielsweise als Flügelzellenmotor ausgeführt werden, der durch Kopplung mit einer Motorwelle (Kurbelwelle 8, Nockenwelle etc.) des Verbrennungsmotors 1'' seine Leistung in den Verbrennungsmotor 1'' unmittelbar einspeist.

Dieses System ist regelungstechnisch sehr einfach zu beherrschen, da das komprimierte Frischgas aus der Abgasladepumpe 30 direkt in die Expansionsmaschine 60 geleitet wird und nicht getaktet werden muss. Auf eine Kühlung des komprimierten Frischgases kann in den meisten Fällen verzichtet werden, und die Länge der Frischgasdruckleitung 62 spielt eine untergeordnete Rolle. Insbesondere im Motorteillastbetrieb kann die in der Abgasladepumpe 30 umgewandelte Abgasenthalpie in Form ungedrosselter Frischgasströme durch die Expansionsmaschine 60 geleitet werden.

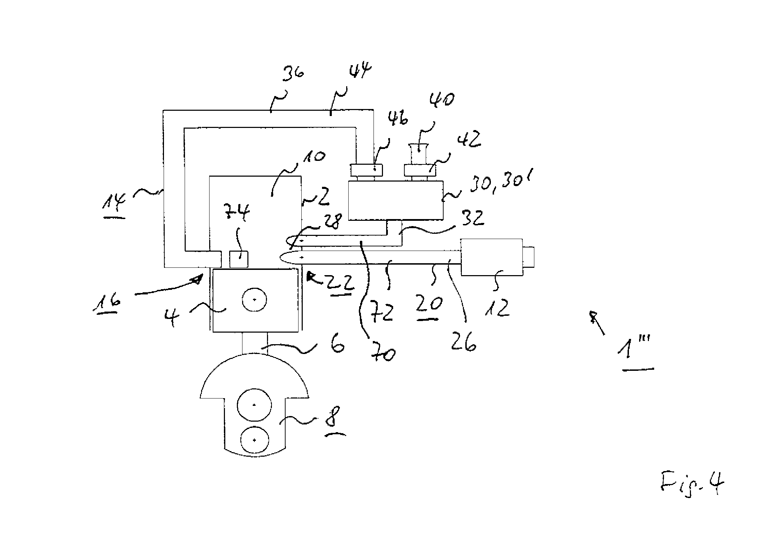

In den vorgenannten Beispielen wurde die Funktionsweise der Nutzung der Abgasenthalpie in der Abgasladepumpe 30 anhand von der Einbindung in die Gasführung bei 4-Takt-Motoren erläutert. Die Abgasladepumpe 30 kann aber auch an schlitzgesteuerten Verbrennungsmotoren betrieben werden, wie beispielsweise an schlitzgesteuerten Zweitaktmotoren, Wankelmotoren oder Drehschiebermotoren. In diesen Fällen sind keine Einlass- oder Auslassventile 18, 24 im eigentlichen Sinne vorhanden, und die Funktionalität des Gaseinlassventilsystems 16 und des Gasauslassventilsystems 22 werden über entsprechend angeordnete Steuerschlitze im Zylindermantel abgebildet. Ein Ausführungsbeispiel für diese Variante der Erfindung ist in der Schemadarstellung eines als Zweitaktmotor ausgeführten Verbrennungsmotors 1''' gem. Fig. 4 gezeigt.

Bei dieser Ausführung kann sogar auf ein Absperrventil in der Abgasleitung 26 verzichtet werden, indem ein Vorauslasskanal 70, der zeitlich phasenversetzt vor dem Hauptauslasskanal 72 öffnet, das Abgas während der ersten Taktphase des Auslasstakts in die Abgasladepumpe 30 leitet. Dementsprechend ist in dem in Fig.4 schematisch dargestellten schlitzgesteuerten Zweitaktmotor 1''' der Vorauslasskanal 70 ausgangsseitig mit der Primärseite der Abgasladepumpe 30 verbunden. Bei abwärts gehendem Arbeitskolben 4 öffnet dieser Vorauslasskanal 70 somit als erster Kanal, und das Abgas wird zur zumindest teilweisen Entspannung der Primärseite der Abgasladepumpe 30 zugeleitet. Bei weiter gehendem Arbeitskolben 4 wird anschließend der Hauptauslasskanal 72 freigegeben. Damit wird über den Brennraum 10 des Zylinders 2 ein gasseitiger "Kurzschluss" zwischen dem Vorauslasskanal 70 und dem Hauptauslasskanal 72 hergestellt, und das Abgas in der Primärseite der Abgasladepumpe 30 entspannt weiter und entweicht über den Zylinder 2 in den Hauptauslasskanal 72.

Die komprimierte Frischluft aus der Abgasladepumpe 30 wird in dieser Ausführungsform über den Frischgasdruckkanal 44 zu den Überströmkanälen 74 geführt, die beim Öffnen das Frischgas in den Zylinder 2 blasen und das Restgas ausspülen. Die Abgasladepumpe 30 kann somit die allgemein übliche Kurbelgehäuseladepumpe ersetzten und einen ölumlaufgeschmierten Kurbeltrieb ermöglichen. Die Abgasladepumpe 30 übernimmt drehzahlunabhängig auch die die Ladungswechsel unterstützende Aufgabe der sonst bei Zweitaktmotoren üblichen voluminösen Resonanzauspuffanlage ohne deren drehzahlabhängige Resonanzeffekte.

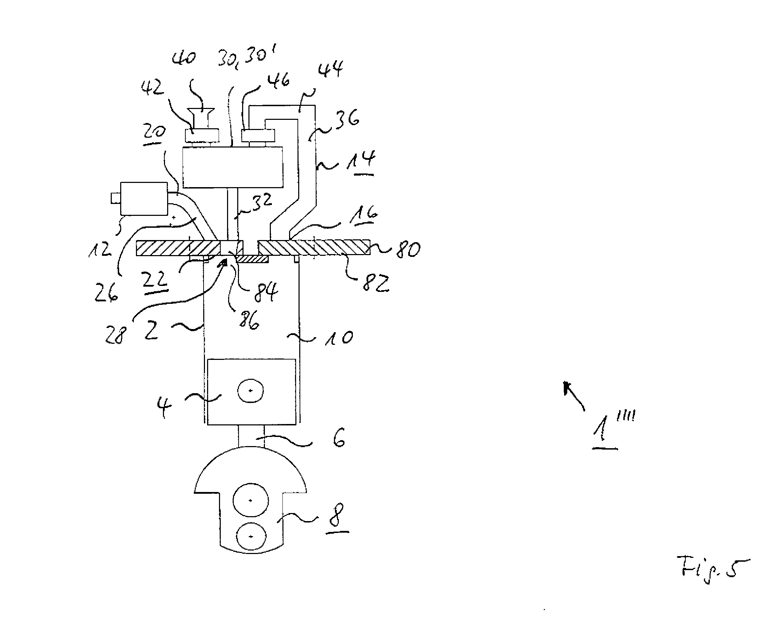

In der weiteren alternativen Ausführungsform eines Verbrennungsmotors 1'''' gem. Fig.5 ist die Abgasladepumpe 30 an einer Drehschiebersteuerung in einem Zylinderkopf 80 angeordnet. Wenn der Drehschieber 82, hier als Flachdrehschieber ausgeführt, mit seinem Steuerschlitz 84 die Auslassöffnung 86 im Zylinderkopf 80 des Verbrennungsmotors 1'''' freizugeben beginnt, strömt Abgas über den Vorauslasskanal 70 zur Abgasladepumpe 30. Bei weiter drehendem Drehschieber 82 beginnt sich der Hauptauslasskanal 72 zu öffnen, über den das Abgas aus der Abgasladepumpe 30 und dem Brennraum 10 des Zylinders 2 nun entweicht.

Die Abgasladepumpe 30 kann in Verbindung mit einer Drehschiebersteuerung alle die in den vorstehend erläuterten Verfahren beschriebenen Ladungswechselvarianten umsetzen. Insbesondere lassen sich mit Drehschiebersteuerungen sehr kleine Schadvolumina zwischen Motorauslassdrehschieber und Abgasladepumpe 30 umsetzen.

Das Expansionsvolumen in der Primärseite in der Abgasladepumpe 30 beträgt in einer bevorzugten Ausgestaltung zwischen 30 bis 300% des Zylinderhubvolumens des Verbrennungsmotors 1. Die niedrigen Prozentwerte beziehen sich bevorzugt auf Verbrennungsmotoren mit geringen Abgasdrücken (2-3 bar) im Auslasskanal vor der Abgasladepumpe bzw. geringe Luftaufwände (Aufladung durch Nachladung). Große Expansionsvolumina der Abgasladepumpe 30 hingegen lassen sich effizient bevorzugt mit hohen Abgasdrücken (7-8 bar) kombinieren. Die entsprechend erzeugten hohen Luftaufwände in der Abgasladepumpe 30 können vorteilhaft über positives Spülgefälle mit Aufladung oder auch über eine separate Expansionsmaschine genutzt werden.

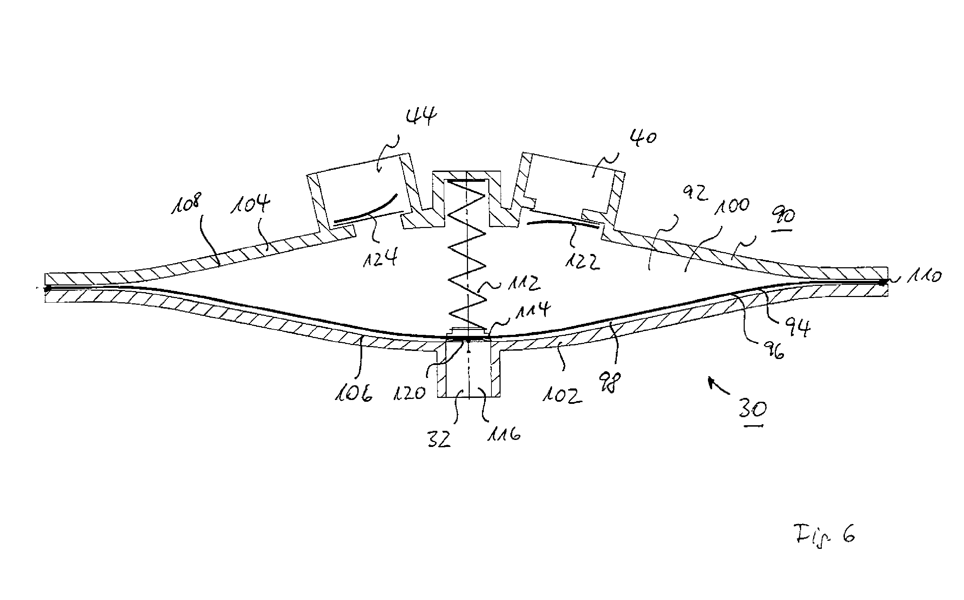

Der als eigenständig erfinderisch angesehene Aufbau der Abgasladepumpe 30 wird anhand der Querschnittsdarstellung in Fig.6 näher erläutert. Grundsätzlich könnte die Abgasladepumpe 30 zwar als Faltenbalgpumpe oder entsprechend mehrteilig elastisch verformbaren Trenneinheiten ausgeführt sein; in der als besonders bevorzugt angesehenen Ausführung gem. Fig. 6 ist sie jedoch als Membranpumpe ausgeführt.

Die Abgasladepumpe 30 umfasst ein Druckgehäuse 90, dessen Innenvolumen 92 über eine eine elastisch verformbare Trenneinheit 94 bildende Membran 96 in eine Mehrzahl - im dargestellten Ausführungsbeispiel zwei - von gasseitig voneinander getrennten Teilvolumina 98, 100 aufgeteilt ist.

Zwischen einem abgasseitigen Gehäusedeckel 102 (Heißseite) und einem frischgasseitigem Gehäusedeckel 104 (Kaltseite), die gemeinsam das Druckgehäuse 90 bilden, befindet sich somit als elastisch verformbare Trenneinheit 94 die Membran 96. Diese trennt die beiden Teilvolumina 98, 100 (Heißseite bzw. Kaltseite), die sich zwischen der Membran 96 und den gewölbten Innenflächen 106, 108 der beiden Gehäusedeckel 102 bzw. 104 aufspannen, gasdicht voneinander. Eine zusätzliche radial umlaufende Dichtung 110 kann vorgesehen sein. Die Membran 96 kann unter Druckbeaufschlagung oder durch eine senkrecht auf sie wirkende Kraft unter elastischer Verformung ausgelenkt werden. Die Innenflächen 106, 108 der beiden Gehäusedeckel 102, 104 stellen die für die Membran 96 begrenzenden Anlageflächen unter maximaler zulässiger Membranauslenkung in die jeweilige Richtung dar. Die Membran 96 vollzieht zwischen ihren maximalen Auslenkungen in den Teilvolumina 98, 100 der Heiß- bzw. Kaltseite eine identische, aber entgegengesetzte Volumenänderung.

Als besonders vorteilhaft und eigenständig erfinderisch angesehen wird die Konturierung der innenseitige, der Membran 96 zugewandten Innenflächen 106, 108 der beiden Gehäusedeckel 102, 104. Diese sind derart ausgestaltet, dass sie flächig die Anlageflächen für die Membran 96 im jeweils maximal ausgelenkten Zustand bilden, so dass die Membran 96 in diesen Zuständen jeweils weitgehend und nahezu vollflächig abgestützt ist. Aufgrund der Konturierung, wie sie insbesondere der Darstellung in Fig. 6 entnehmbar ist, kann die Membran 96 bei einer Positionsänderung oder Änderung ihrer Auslenkung auf der jeweiligen Innenfläche 106 bzw. 108 abrollen, so dass eine besonders materialschonende Arbeitsweise ermöglicht ist. Durch die Aufrollbewegung der Membran 96 auf die Innenfläche 106, 108 des jeweiligen Gehäusedeckels 102, 104 ergibt sich eine stetige Verzögerung der Membran 96 bis zu deren Stillstand ohne abrupten harten Anschlag in deren Endposition, so dass insbesondere die Lebensdauer der entsprechenden Komponenten besonders begünstigt ist.

Die Membran 96 ist mechanisch derart mit einer Vorspannkraft beaufschlagt, dass im drucklosen Zustand das zur Verbindung mit dem Abgassystem des Verbrennungsmotors vorgesehene Teilvolumen 98 im Rahmen der Verformbarkeit der Membran 96 einen Minimalwert aufweist. In diesem Zustand, der der Darstellung in Fig. 6 entspricht, liegt die Membran somit weitestgehend an der zu diesem Zweck geeignet konturierten und in ihrem Verlauf an die Membran 96 angepassten Innenfläche 106 des heißgasseitigen Gehäusedeckels 102 an. Zur Bereitstellung der genannten Vorspannkraft ist im Ausführungsbeispiel gem. Fig. 6 eine (oder bedarfsweise auch mehrere) Feder 112 vorgesehen. Diese lenkt die Membran 96 im drucklosen Zustand aus ihrer spannungsfreien Mittellage Richtung Innenfläche 106 des Gehäusedeckels 102 aus. Die Vorspannkraft der Feder(n) 112 ist dabei größer als die Rückstellkraft der maximal ausgelenkten Membran 96 gewählt, so dass die Membran 96 im Zustand ohne Gasdruckbeaufschlagung voll ausgelenkt auf der Innenfläche 106 des Gehäusedeckels 102 aufliegt. Die Feder 112 stützt sich ihrerseits am kaltgasseitigen Gehäusedeckel 104 und über einen Federteller 114 ab, der mit der Membran 96 fest verbunden ist.

Im heißgasseitigen Gehäusedeckel 102 ist mindestens ein Abgaskanal 116 angeordnet, durch den Abgas in das die Primärseite der Abgasladepumpe 30 bildende Teilvolumen 98 der Heißseite ein- bzw. ausströmen kann. Der Abgaskanal 116 ist in vorteilhafter Weise zentrisch im Gehäusedeckel 102 positioniert, um eine rotationssymmetrische Wärmebelastung der Membran 96 zu bewirken. Damit ein frontales Anströmen der Membran 96 mit heißem Abgas durch den Abgaskanal 116 vermieden wird und um die lokale Wärmebelastung in Membranmitte zu senken, ist in vorteilhafter Ausgestaltung an der Membran 96 - bevorzugt mittig - ein Hitzeschild 120 angebracht, an dem das einströmende Abgas radial in das sich öffnende Teilvolumen 98 der Heißseite umgelenkt wird. Der Hitzeschild 120 ist vorteilhafterweise gemeinsam mit dem Federteller 114 und der Membran 96 verbunden. Die zur Membran 96 gerichtete Auflagefläche des Hitzeschilds 120 liegt zwecks geringen Wärmeübergangs auf die Membran 96 auf dieser nur partiell auf.

Zum die Sekundärseite der Abgasladepumpe 30 bildenden zweiten Teilvolumen 100 und entsprechend durch den dieses begrenzenden Gehäusedeckel 104 hindurch führen mindestens ein Frischgassaugkanal 40 und mindestens ein Frischgasdruckkanal 44. Diese sind jeweils mit Rückschlagventilen (Zungenventilen) 122,124 ausgestattet, so dass ein Gasfluss im Frischgassaugkanal 40 ausschließlich in das Teilvolumen 100 der Kaltseite der Abgasladepumpe 30 hinein und im Frischgasdruckkanal 44 ausschließlich aus dem Teilvolumen 100 der Kaltseite heraus stattfinden kann. Zwecks hohen Kompressionsverhältnisses auf der Kaltseite sind die Rückschlagventile 122,124 vorzugsweise so nahe wie möglich an der Innenfläche 108 des Gehäusedeckels 104 angebracht, um bei Auslenkung der Membran 96 an die Innenfläche 108 das verbleibende Restvolumen (Schadvolumen) zwischen Membran 96 und den Rückschlagventilen 122,124 möglichst klein zu halten. Die Mündung des Frischgassaugkanals 40 im Gehäusedeckel 104 ist in vorteilhafter Ausgestaltung derart positioniert, dass der Frischgasstrom beim Einströmen in die Abgasladepumpe 30 auf die Membran 96 an deren heißesten Flächenabschnitt trifft, d.h. in der Regel gegenüberliegend zum Abgaskanal 116. Damit kann das zugeführte Frischgas zu Kühlzwecken der Membran 96 in deren thermisch am höchsten belasteten Bereich genutzt werden.

Im Ruhezustand ist die Membran 96 in Folge der Vorspannung maximal auf die Heißseite ausgelenkt, und das Teilvolumen 98 der Heißseite ist minimal. Auf der Kaltseite ist das entsprechende Teilvolumen 100 hingegen maximal mit Frischgas gefüllt. Wird nun die Heißseite durch den Abgaskanal 116 mit unter Druck stehendem Abgas aus dem Verbrennungsmotor beaufschlagt, so bewegt sich die Membran 96 Richtung Kaltseite und verdrängt unter Kompression das im Teilvolumen 100 der Kaltseite gespeicherte Frischgas durch das Rückschlagventil 124 in den Frischgasdruckkanal 44, bis die Membran 96 an der Innenfläche 108 anliegt. Entspannt sich nachfolgend der Abgasdruck auf der Heißseite (beispielsweise durch Öffnen des Absperrventils 34), so wird die Membran 96 durch die Feder 112 und die anfangs vorhandene Membranrückstellkraft wieder auf die Innenfläche 106 gedrückt. Das Abgas auf der Heißseite wird komplett ausgeschoben und gleichzeitig das zunehmende Teilvolumen 100 auf der Kaltseite mit Frischgas durch den Frischgassaugkanal 40 gefüllt. Die in der komprimierten Feder 112 gespeicherte Energie wird somit zum Ladungswechsel (Ausschieben von Abgas und Ansaugen von Frischgas) in der Abgasladepumpe 30 genutzt.

Auf Grund der sehr geringen Masse der Membran 96 liegen die Eigenfrequenzen des schwingfähigen Systems Membran 96 - Feder 112 in der Praxis üblicherweise im Bereich von 150-250 Hz, was einer Motordrehzahl von 9000-15000 U/min entspricht. Besonders vorteilhaft ist dabei eine Auslegung vorgesehen, bei der die Eigenfrequenzen des Systems hinreichend höher als die vorgesehenen Nenndrehzahlen des Motors liegen, so dass unerwünschte Resonanzeffekte vermieden sind. Da bei Viertaktmotoren die Abgasladepumpe 30 nur etwa 20-60°KW benötigt, um das Abgas zu entspannen und das Frischgas zu verdichten, verbleiben daher rund 300°KW, um Frischgas wieder anzusaugen.

Ein zusätzlicher Vorteil bei der Einbindung der Abgasladepumpe 30 in das Abgassystem des Verbrennungsmotors liegt unter anderem darin, dass ein besonders günstiges akustisches Verhalten im Sinne einer Geräuschreduzierung erhalten werden kann. Die Entspannung des Abgasdruckes in der Abgasladepumpe 30 auf beispielsweise etwa 30-50% des ursprünglichen Wertes beim Öffnen des Motorauslassventils wirkt sich nämlich Lautstärke mindernd auf das Mündungsgeräusch der Abgasanlage aus.

Die harmonische Volumenänderung der Kaltseite im Ansaugvorgang der Abgasladepumpe 30 wirkt sich ebenfalls geräuschmindernd aus. Unstetige Volumen- oder Druckgradienten treten während des Ansaugvorgangs nicht auf.

Auch die mechanische Bauteilbelastung kann vergleichsweise gering gehalten werden, so dass mit einfachen Mitteln eine hohe Langlebigkeit des Systems erreichbar ist. Die Innenflächen 106, 108 sind in bevorzugter Ausgestaltung im Querschnitt als Kurvenbahnen ausgeführt, auf die die Membran 96 bei Auslenkung von ihrem äußeren Rand aus zur Membranmitte hin aufrollt und somit nicht abrupt anschlägt. Die Kurvenbahnen sind dabei in weiterer vorteilhafter Ausgestaltung in ihrer Geometrie an die Werkstoff- und Geometrieeigenschaften der Membran 96 angepasst ausgelegt, so dass die mechanische Belastung der Membran 96 möglichst gleichmäßig über deren Fläche verteilt ist und die Dauerfestigkeitsgrenzen des Membranwerkstoffs (in Abhängigkeit von der Werkstofftemperatur) nicht überschritten werden.

Die Membran 96 und die Feder 112 werden vorzugsweise ausschließlich elastisch verformt, es finden keine gleitenden Bewegungen statt. Die Abgasladepumpe 30 kommt somit vollkommen ohne Flüssigkeitsschmierung (Ölschmierung) aus.

Tribologisch vorteilhaft können die Innenflächen 106, 108 und/oder die Oberflächen der Membran 96 mit einem Trockenschmierstoff wie beispielsweise Graphit oder PTFE imprägniert werden, um verbesserte Abrolleigenschaften der Membran 96 bei Anlage an die Innenoberflächen 106, 108 der Gehäusedeckel 102,104 zu erhalten.

Bezüglich der thermischen Bauteilbelastung ist anzumerken, dass die Membran 96 in Verbindung mit Ottomotoren während des Betriebs auf der Heißseite bei Abgaseintritt in die Abgasladepumpe 30 kurzzeitig mit bis zu 1000°C heißem Abgas beaufschlagt wird. Die schnelle Expansion des Abgases in der Abgasladepumpe 30 lässt jedoch, in Abhängigkeit von deren Expansionsvolumen, die Gastemperatur innerhalb kürzester Zeit (weniger °KW) um etwa 200-400 Kelvin fallen. Ein erheblicher Teil der Abgaswärme wird in den heißseitigen Gehäusedeckel 102 eingeleitet. Die Membran 96 wird durch das im Betrieb kontinuierliche Pulsieren von Frischgas auf der Kaltseite zwangsgekühlt. Da die Membran 96 je nach Verhältnis von Arbeitsfrequenz zu Eigenfrequenz einen erheblichen Zeitanteil in Ruhe an der Innenfläche 106 des heißgasseitigen Gehäusedeckels 102 anliegend verbringt, findet in diesem Zeitraum ein effizienter Wärmefluß von der Membran 96 in diesen Gehäusedeckel 102 statt. Versuche haben gezeigt, dass die Membrantemperaturen an den heißesten Stellen ca. 250°C betragen. Die Erwärmung des Frischgases in der Abgasladepumpe 30 wird gegebenenfalls wieder rückgekühlt.

Die Gehäusedeckel 102, 104 können neben ihrer eigentlichen Funktion zusätzlich als Wärmetauscher ausgeführt sein, indem deren Außenflächen beispielsweise mit Hilfe von Verrippungen einem kühlenden Luftstrom ausgesetzt werden oder die Außenflächen von einer Kühlflüssigkeit umspült werden. Der Wärmeentzug am heißseitigen Gehäusedeckel 102 hat vorteilhaft zur Folge, dass damit auch die Membranarbeitstemperatur gesenkt wird, da sowohl die mittlere Abgastemperatur niedriger ausfällt, als auch der Wärmestrom von der Membran 96 auf den Gehäusedeckel 102 wegen der größeren Temperaturdifferenz höher ist. Ein Wärmeentzug am kaltseitigen Gehäusedeckel 104 übernimmt die Funktion einer Ladeluftkühlung, womit unter Umständen auf einen separaten nachgeschalteten Ladeluftkühler 38 verzichtet werden kann oder alternativ eine höhere Gesamtkühlleistung einschließlich Ladeluftkühler 38 erreichbar wäre. Die aus der Abgasladepumpe 30 entzogene Wärmeleistung kann insbesondere bei Anwendungen im Bereich der Kraft-Wärme-Kopplung zu Heizzwecken genutzt werden.

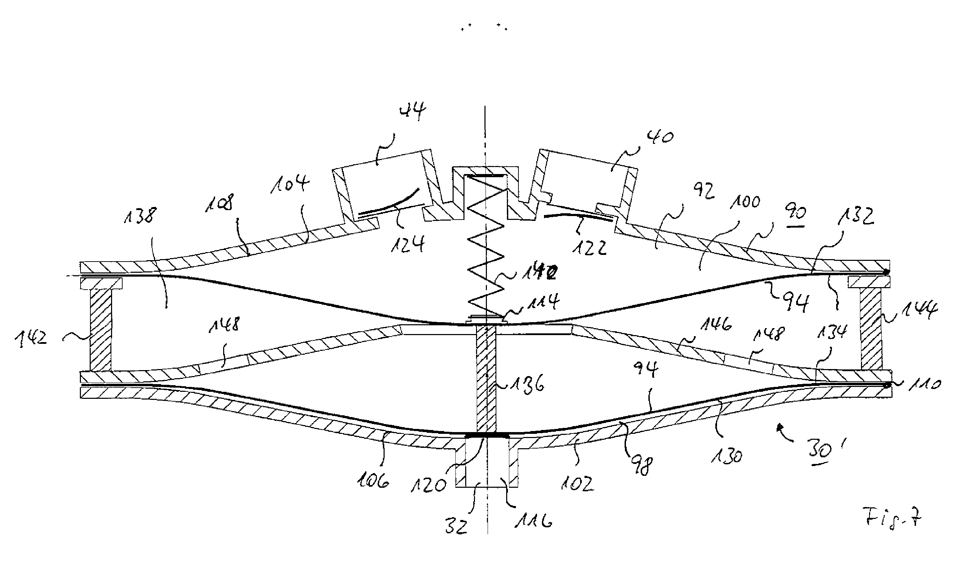

In einer alternativen, ebenfalls als eigenständig erfinderisch angesehenen Ausführungsform kann die Abgasladepumpe 30 auch als Membranpumpe mit Doppelmembran ausgeführt sein. Eine solchermaßen ausgelegte alternative Abgasladepumpe 30' ist in Fig.7 im Querschnitt gezeigt. Hierbei bilden zwei parallel zueinander angeordnete Membranen 130,132 eine Doppelmembran 134. Die Membranen 130, 132 sind über ein Verbindungselement 136 starr miteinander gekoppelt und trennen das Innenvolumen 92 des Druckgehäuses nunmehr in drei Teilvolumina 98, 100, 138, nämlich in die unverändert vorhandenen heiß- bzw. kaltseitig vorhandenen Teilvolumina 98 bzw. 100 und zusätzlich dazu nun noch das dazwischen gelegene dritte Teilvolumen 138.

Die Membran 130 verschließt dabei gasdicht mit einer Seite das als Abgasraum oder Primärseite der Abgasladepumpe 30' dienende heißgasseitige Teilvolumen 98, und entsprechend verschließt die Membran 132 das als Frischgasraum oder Sekundärseite der Abgasladepumpe 30' dienende kaltgasseitige Teilvolumen 100. Eine Vorspannkraft, beispielsweise wiederum erzeugt durch eine Feder 140, drückt auf die Membran 132, die wiederum über das Verbindungselement 136 diese Bewegung an die Membran 130 weitergibt, bis die Membran 130 ihre maximale Auslenkung durch Anlage an der Innenwand 106 des Gehäusedeckels 102 eingenommen hat. Die Funktionsweise des Ladungswechsels der Abgasladepumpe 30' mit Doppelmembran ist identisch zu der Bauart mit Einfachmembran. Der Raum zwischen den Membranen 130,132 ist mit Gas gefüllt, vorzugsweise mit Luft, und stellt somit eine sehr gute Wärmeisolierung zwischen den Membranen 130,132 dar, so dass eine Aufheizung der Frischgasseite in der Abgasladepumpe 30' durch Wärmeeintrag aus der mit Abgas beaufschlagten Membran quasi vermieden wird.

Der Wärmedurchgang über das vorzugsweise dünnwandig ausgeführte Verbindungselement 136 kann bei geeigneter Geometrie- und Materialwahl, vorzugsweise durch Auswahl eines Materials geringer Wärmeleitfähigkeit, vergleichsweise gering gehalten werden. Die beiden Gehäusedeckel 102, 104 sind starr miteinander verbunden, weisen in ihrem umlaufenden Gehäuserand 142 in besonders bevorzugter Ausgestaltung jedoch Öffnungen 144 auf, über die das zwischen den Membranen 130,132 befindliche Teilvolumen 138 gasseitig mit der Umgebung in Verbindung steht. Durch die Öffnungen 144 wird ein durch die Membranbewegungen unterstützter Luftaustausch vom Teilvolumen 138 zwischen den Membranen 130,132 mit der Umgebungsluft ermöglicht, was insbesondere zu Kühlzwecken genutzt werden kann.

Im zwischen den Membranen 130, 132 befindlichen Teilvolumen 138 kann in vorteilhafter Ausgestaltung in der Art eines weiteren Gehäusedeckels ein Membrananschlag 146 vorgesehen sein, der einerseits die Aufgabe hat, für die Membran 130 als Anlagefläche oder Abstützung bei hohen Abgasdrücken in der Abgasladepumpe 30' zu dienen, und andererseits eine erzwungene Luftkühlung der Membran 130 auf Grund der Volumenänderung zwischen Membran 130 und Membrananschlag 146 bei Membranbewegung herbeizuführen. Der Membrananschlag 146 ist vorzugsweise mit Durchbrüchen 148 versehen, um innerhalb des Teilvolumens 138 zwischen den darin durch den Membrananschlag 146 gebildeten Kammern einen effektiven Luftaustausch bei Membranbewegung zu gewährleisten. Der Membrananschlag 146 ist in seiner Konturierung ähnlich den Innenflächen 106, 108 derart ausgeführt, dass auch die Membran 130 bei einer Positionsänderung oder Änderung ihrer Auslenkung auf ihm abrollen kann, so dass auch hier eine besonders materialschonende Arbeitsweise ermöglicht ist. Auch durch die Aufrollbewegung der Membran 130 auf dem Membrananschlag 146 ergibt sich eine stetige Verzögerung der Membran 130 bis zu deren Stillstand ohne abrupten harten Anschlag in deren Endposition.

Die Membranen 130, 132 müssen nicht zwangsläufig gleich groß sein, sondern können unterschiedliche Außendurchmesser, einschließlich entsprechender Gehäusedeckel aufweisen. Mit dieser geometrischen Variation lassen sich in besonders vorteilhafter Weiterbildung unterschiedliche Fördervolumina auf Heiß- und Kaltseite der Abgasladepumpe 30' realisieren. Ist der Membrandurchmesser und damit auch das Pumpvolumen der Frischgasseite kleiner als das der Abgasseite, so kann das Frischgas auf ein höheres Druckniveau komprimiert werden, was beispielweise für Anwendungen erwünscht sein kann, die ein hohes Potential an Abgasenthalpie besitzen, jedoch keinen hohen oder gar reduzierten Luftaufwand benötigen. Im umgekehrten Anwendungsfall ließe sich tendenziell über eine kleine abgasseitige und größere frischgasseitige Membran 130, 132 bei kleinem Abgasenthalpieangebot ein hoher Frischluftdurchsatz auf niedrigem Druckniveau erzielen.

Die Gehäusedeckel 102, 104 der Abgasladepumpe 30,30' können in beiden genannten Varianten recht dünnwandig ausgeführt werden und somit auch preiswert als Blechumformteil hergestellt werden. Die Verbindungsebene der Gehäusedeckel 102, 104 liegt vorteilhafterweise parallel und nahe an der Einspannebene der Membran 96. Als Werkstoffe sind vorteilhafterweise warm- und korrosionsfeste Stähle zumindest für die Abgas- oder Heißgasseite vorteilhaft, wobei bei entsprechender Kühlung auch Aluminiumwerkstoffe in Betracht gezogen werden können. Auf der Frischgasseite kann zwecks guter Wärmeleitung vorteilhaft Aluminium gewählt werden.

Sollen die Gehäusedeckel 102, 104 flüssigkeitsgekühlt werden, ist hingegen in besonders vorteilhafter Ausgestaltung eine zwei- oder mehrteilige Schalenbauweise (aus Blech) für einen oder jeden Gehäusedeckel 102, 104 vorgesehen, wobei jeweils zwischen der "inneren" gasbeaufschlagten Schale und der sie umgebenden äußeren Schale vorteilhafterweise ein Raum bzw. Kanäle zur Führung der Kühlflüssigkeit vorhanden ist. Die Gehäusedeckel 102, 104 bzw. Gehäusedeckelschalen können miteinander über Schweißen, Verpressen, Nieten, Verschraubung, etc. verbunden sein.

Für eine Luftkühlung der Gehäusedeckel 102, 104, die dann in vorteilhafter Weiterbildung zur wärmeabgebenden Oberflächenvergrößerung eine Verrippung erhalten sollten, stellt Aluminium(druck)guß eine wirtschaftliche und besonders bevorzugte Produktionsmethode dar.

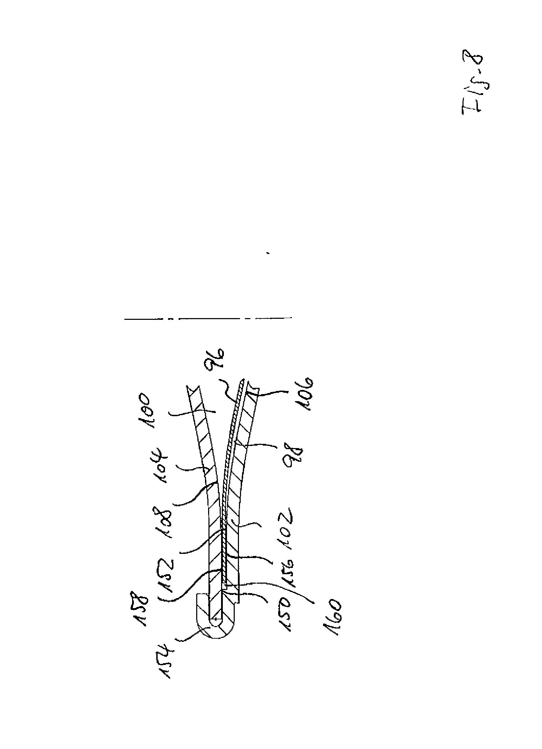

Die Befestigung der Membran 96 zwischen den Gehäusedeckeln 102, 104 erfolgt vorzugsweise ebenfalls gezielt im Hinblick auf die erwarteten Betriebsparameter. Dabei werden besonders bevorzugt die in der Praxis sich einstellenden Bauteiltemperaturen und deren Temperaturunterschiede berücksichtigt, die zu Längenänderungen der Bauteile führen können, die sich etwa zwei Größenordnungen über der Längenänderung (Dehnung) der Membran 96 auf Grund von deren Auslenkung durch Gasdruckbeaufschlagung befinden. Um dem Rechnung zu tragen und die unterschiedlichen thermischen Längendehnungen zwischen Gehäusedeckeln 102, 104 einerseits und Membran 96 geeignet zu kompensieren, ist die Membran 96 in besonders vorteilhafter Ausgestaltung geringfügig radial verschiebbar zwischen den Gehäusedeckeln 102, 104 axial positioniert. In den Figuren 8-13 sind einige Möglichkeiten der Membranbefestigung dargestellt, die ebenfalls jeweils als eigenständig erfinderisch angesehen werden.

Im Ausführungsbeispiel gem. Fig.8 ist die ebene Membran 96 zwischen den Gehäusedeckeln 102,104 axial fixiert, jedoch radial geringfügig verschiebbar gelagert. Der Gehäusedeckel 102 ist in seinem Randbereich mit einem umlaufenden Absatz 150 versehen, der geringfügig höher ist als die Dicke der Membran 96. Der andere Gehäusedeckel 104 liegt auf diesem Absatz 150 unter Bildung eines randseitigen Spalts 152 auf und ist hier beispielsweise mit dem Gehäusedeckel 102 über den gefalzten Bund 154 verpresst. Die Membran 96 ist somit auf den dadurch gebildeten Rutschdichtflächen 156, 158 radial verschiebbar. Der umlaufende Absatz 150 ist dabei derart positioniert, dass sich über den äußeren Rand der Membran 96 hinaus ein Ringspalt 160 zwischen dem Absatz 150 und dem äußeren Rand der Membran 96 bildet. Dieser Ringspalt 160, der in der Praxis beispielsweise lediglich einige zehntel Millimeter Breite besitzt, stellt sicher, dass sich die Membran 96 ungehindert thermisch dehnen kann, aber dennoch ausreichend in den Gehäusedeckeln 102, 104 zentriert wird.

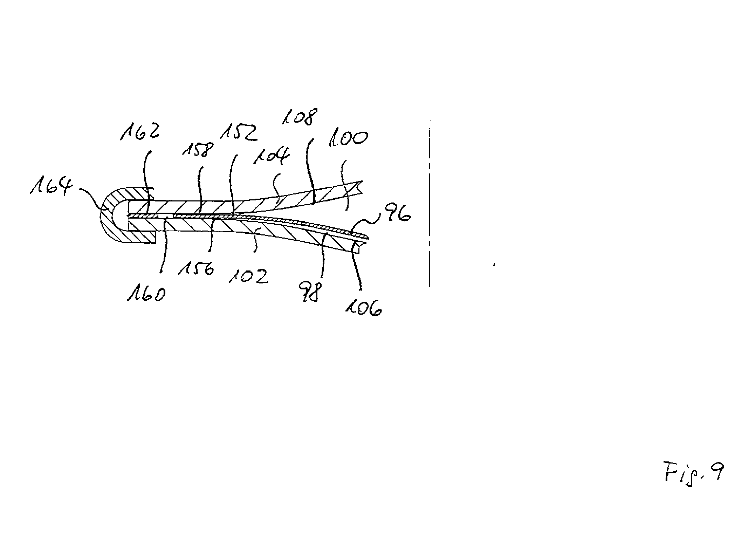

Fig.9 zeigt eine weitere Ausführungsmöglichkeit für eine radial bewegliche Membran 96. In dieser Ausführungsform ist zwischen den Gehäusedeckeln 102, 104 in ihrem randseitigen Kontaktbereich ein Distanzring 162 angeordnet. Das Funktionsprinzip der Membranlagerung über die Rutschdichtflächen 156, 158 bleibt dabei unverändert, wie oben beschrieben. Die gasdichte Verbindung der beiden Gehäusedeckel 102, 104 miteinander ist hier über einen separaten gefalzten Umlaufring 164 hergestellt.

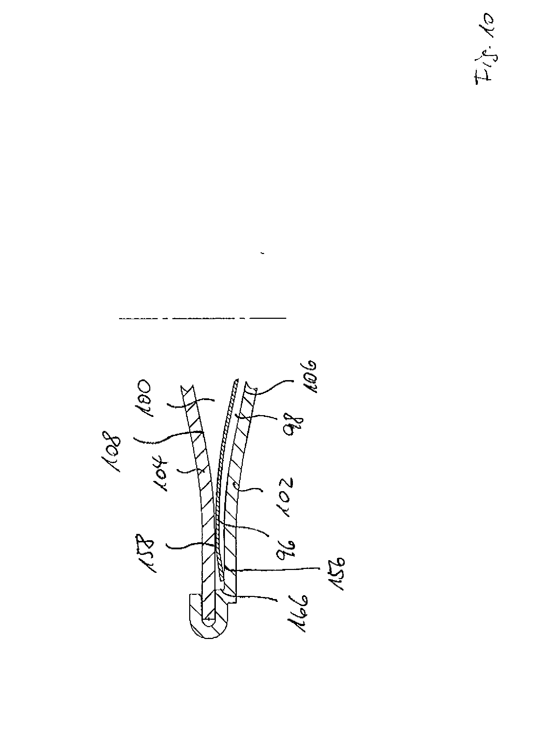

In Fig.10 ist eine sehr vorteilhafte Ausführungsform dargestellt, die sehr fehlertolerant in der Fertigung der Gehäusedeckel 102, 104 ist. Eine Abstufung 166 am Gehäusedeckel 102 ist erheblich höher als die Dicke der Membran 96, womit die Abstufung 166 beispielsweise lediglich durch einen Tiefziehprozess ohne spanende Nachbearbeitung in einem vergleichsweise breiten Toleranzbereich herstellbar ist. Die Anlage der Membran 96 an die Rutschdichtflächen 156, 158 erfolgt durch eine radial umlaufende, leicht kegelförmige Wölbung des Membranrandes.

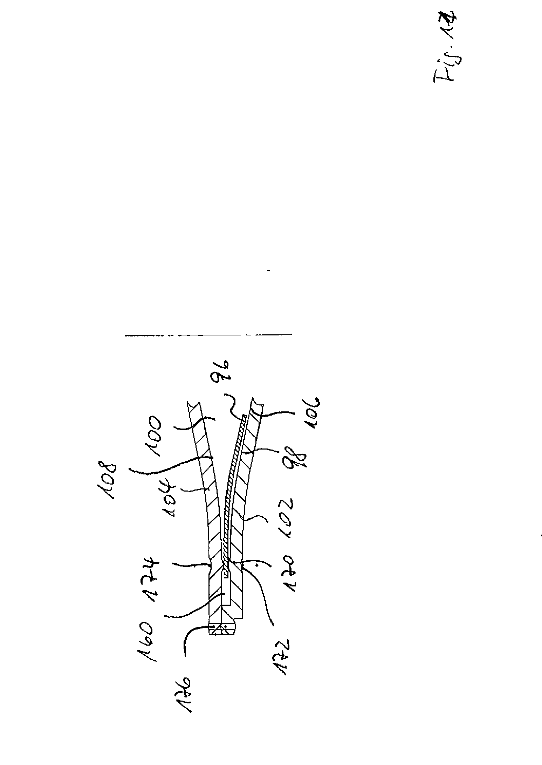

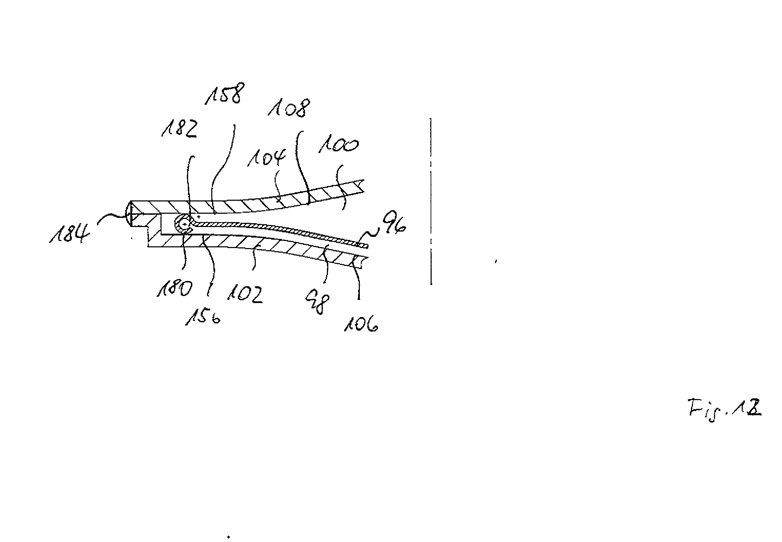

Bei unverändertem maximalen Betrag der Materialbeanspruchung und des Durchmessers der Membran 96 kann der Membranhub und damit das maximale Fördervolumen der Abgasladepumpe 30, 30' erhöht werden, indem die Membran 96 in ganz besonders vorteilhafter und ebenfalls eigenständig erfinderischer Ausgestaltung nicht wie bisher dargestellt axial planparallel eingespannt ist, sondern an ihrem Rand 170 drehbar gelagert wird. Die Drehbarkeit bezieht sich dabei auf eine virtuelle gekrümmte, mit dem Membranrand umlaufende Achse. Die Figuren 11 und 12 stellen Ausführungsbeispiele dieser besonders vorteilhaften Bauart dar.

Fig. 11 zeigt die beiden Gehäusedeckel 102, 104 mit jeweils einer radial umlaufenden Sicke 172, 174. Die Sicken 172, 174 nehmen die Membran 96 zangenförmig auf, erlauben der Membran 96 bei Auslenkung jedoch die Möglichkeit, eine wippende Drehbewegung auszuführen, so dass der Membranrand einer wesentlich geringeren Deformation unterliegt. Der Ringspalt 160 erlaubt wiederum thermische Dehnungsunterschiede der Bauteile. Die beiden Gehäusedeckel 102, 104 sind hier beispielsweise über mehrere Nieten 176 miteinander verbunden.

Im Ausführungsbeispiel gem. Fig. 12 ist die Drehbarkeit an der Membraneinspannung durch eine gewölbte Umbördelung 180 des Membranrands 182 erreicht. Die Membran 96 liegt somit linienförmig an den Rutschdichtflächen 156, 158 an und kann auf diesen Rollbewegungen ausführen. Die beiden Gehäusedeckel 102, 104 sind hier beispielsweise über eine Schweißnaht 184 miteinander verbunden.

Die Membran 96, 130, 132 stellt ein thermisch und mechanisch hochbelastetes Bauteil dar. Daher sind als Materialien vorzugsweise warmfeste Stähle, wie V4A, Hastelloy, Inconel, Duratherm, Nimonic, Ti Al6V4, die gleichzeitig als Federwerkstoff hohe Dehngrenzen und Zugfestigkeiten aufweisen, vorgesehen. Insbesondere sind Werkstoffe geringen E-Moduls, wie beispielsweise Titanlegierungen, vorteilhaft, da damit die benötigten Rückstellkräfte der Membran 96, 130, 132 und damit auch die erforderliche Kraft der Feder 112,140 reduziert werden. Titanlegierungen mit ihrem relativ geringen spezifischen Gewicht halten die Masse der Membran 96, 130, 132 gering und damit die Eigenfrequenz des schwingenden Systems (Membran und Feder) hoch.

Die Membrandicke ist besonders bevorzugt im Bereich etwa zwischen 0,3 bis 1,0 Millimetern gewählt. Vergleichsweise dünne Membranen 96, 130, 132 sind hinsichtlich der Deformierbarkeit vorteilhaft, dickere bzgl. der thermo-mechanischen Belastbarkeit. Je nach Anwendungsfall ist vorzugsweise somit ein Kompromiss zwischen Material und Membrandicke gewählt.

Eine kreisrunde Membrangeometrie besitzt den Vorteil einer rotationssymmetrischen Belastung hinsichtlich mechanischer und thermischer Beanspruchung, ist aber nicht zwingend notwendig.

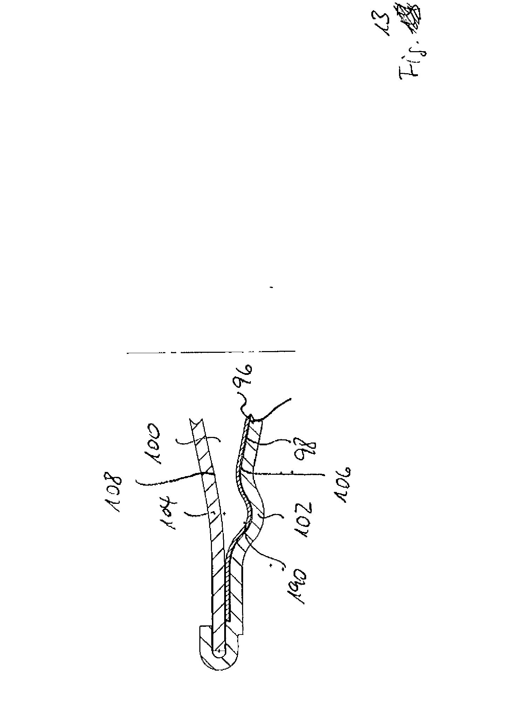

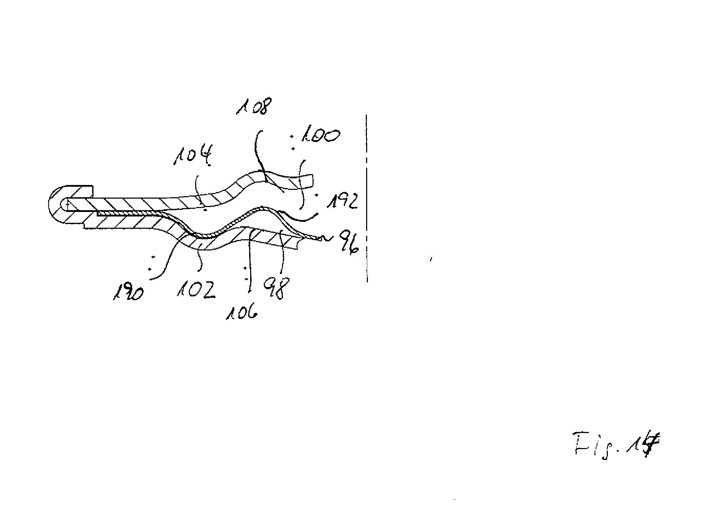

Neben einer kreisrunden Membranaußenkontur stellt eine ebene Scheibengeometrie der Membran 96, 130, 132 eine besonders einfache und somit bevorzugte Ausführung dar. Solche Geometrien können preisgünstig aus Blechtafeln oer Rollen gestanzt oder geschnitten werden. Die Membran 96, 130, 132 kann mit radial umlaufenden Sicken 190, 192 ausgeführt werden, wie dies in den Fig.13 und 14 dargestellt ist. Eine oder mehrere dieser Sicken 190, 192 können beispielswiese durch einen Tiefziehvorgang in die Membran 96, 130, 132 eingebracht werden. Die Sicken 190, 192 reduzieren durch Eigenverformung die radialen Spannungen bei Auslenkung der Membran 96, 130, 132, so dass bei unverändertem Membrandurchmesser größere Membranhübe ausgeführt werden können. Ebenfalls können die radial umlaufenden Sicken 190, 192 die unterschiedlichen Wärmedehnungen zwischen Membranmitte, Membranrand und Gehäusedeckeln 102, 104 durch Eigenverformung kompensieren, so daß der Membranrand fest zwischen den Gehäusedeckeln 102, 104 sowohl axial, als auch radial verpreßt werden kann. Dies bietet Vorteile für eine besonders kostengünstige Fertigung der Abgasladepumpe 30, 30'.

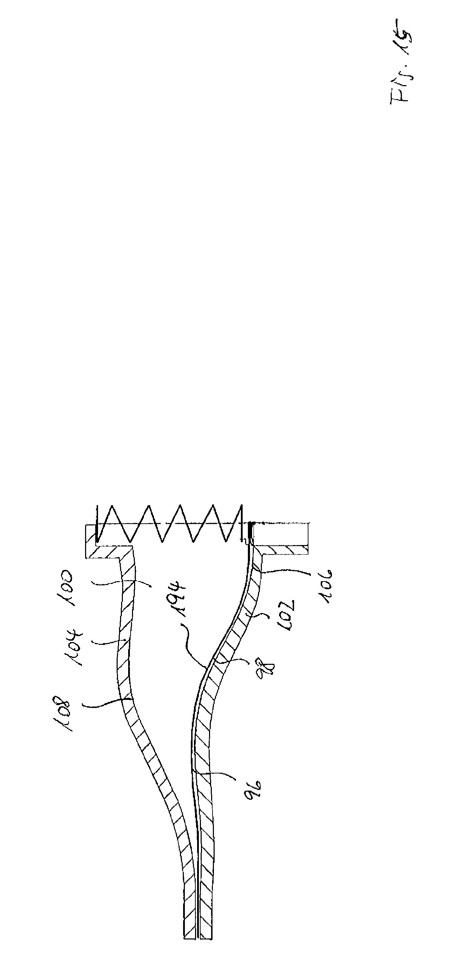

Im Bereich der Sicken 190, 192 sind die Konturen der Gehäusedeckel 102, 104 an ihren Innenoberflächen 106, 108 in besonders vorteilhafter Ausgestaltung für die Bewegungsfreiheit der Membran 96, 130, 132 geeignet angepasst. Im Ausführungsbeispiel gem. Fig.15 ist eine Membran 96, 130, 132 gezeigt, bei der sich lediglich eine Sicke 194 mit vergleichsweise geringer Krümmung von der Membranmitte bis zu den Einspannflächen zwischen den Gehäusedeckeln 102, 104 erstreckt. Diese Sicke 194 weist eine sehr geringe Eigenkrümmung mit entsprechend geringen Eigenspannungen auf, so dass in dieser Ausführung sehr hohe Membranhübe darstellbar sind. Die Gehäusedeckel 102, 104 können auf Grund der großen Sickeneigenradien der Membrangeometrie problemlos in ihrer Kontur an die Membran 96, 130, 132 angepasst werden.

Das Absperrventil 34 hat die grundsätzliche Aufgabe, den Abgasstrom aus dem Verbrennungsmotor 1, 1', 1 ", 1''' anfangs ausschließlich der Abgasladepumpe 30, 30' zuzuführen und anschließend das teilentspannte Abgas schnell aus der Abgasladepumpe 30, 30' und dem Verbrennungsmotor 1, 1', 1 ", 1''' in die Schalldämpfer- oder Auspuffanlage 12 (Atmosphäre) abzuführen, wo es entspannt werden bzw. abfließen kann. Kann diese Aufgabe vom eigentlichen Verbrennungsmotor 1, 1', 1 ", 1''' nicht unmittelbar durch konstruktive Maßnahmen (wie beispielsweise die Schlitzsteuerung im Zweitaktmotor, Wankelmotor, Drehschiebersteuerungen, phasenversetzte getrennte Motorauslassventile oder dergleichen) übernommen werden, kommt vorzugsweise ein separates Absperrventil 34 in der Abgasleitung 26 für die Abgassteuerung der Abgasladepumpe 30, 30' zum Einsatz.

Das Absperrventil 34 ist grundsätzlich nicht an eine bestimmte Ventilbauart gebunden. In besonders vorteilhafter Ausgestaltung und in als eigenständig erfinderisch angesehener Bauweise ist das Absperrventil 34 aber wie nachfolgend erläutert aufgebaut und vorzugsweise als Drehschieberventil in Form eines rotierenden Drehschiebers und eines feststehenden Gehäuses ausgeführt. Das Gehäuse nimmt dabei bevorzugt die gasführenden Kanäle auf, der Drehschieber öffnet bzw. trennt Kanalverbindungen im Gehäuse. Ein Drehschieberventil kann unmittelbar oder mittelbar von einer vorhandenen Nockenwelle oder Kurbelwelle des Verbrennungsmotors 1, 1', 1'', 1''' angetrieben werden und mit dieser synchron laufen. Das Absperrventil 34 ist bevorzugt möglichst nahe am Auslassventil 18 des Verbrennungsmotors 1, 1', 1'', 1''' positioniert, um somit das Schadvolumen zwischen Auslassventil 18 und Abgasladepumpe 30, 30' gering zu halten.

Im Allgemeinen erweist sich die Anordnung des Absperrventils 34 bei Ohc- bzw. Dohc-Motoren direkt an der Nockenwelle als vorteilhaft. Vorteilhafterweise dichtet der Drehschieber die Kanäle im Gehäuse über berührungslose Dichtspalte ab, wodurch ein am Dichtungssystem der Kanäle verschleiß- und reibungsfreier Betrieb ermöglicht wird. Die Dichtspalte können axial zwischen planaren Flächen gebildet werden oder alternativ radial zwischen zylindrischen Flächen.

Das Absperrventil 34 kann grundsätzlich die Steuerung mehrerer Kanäle mit voneinander unabhängigen Phasenbeziehungen übernehmen und beispielsweise die Abgaskanäle mehrerer Motorzylinder steuern oder auch vorstehend unter "Verfahren für ausschließliche Aufladung (Drehmoment- bzw. Leistungssteigerung)" beschrieben, die Abgas- und Frischgassteuerung mindestens eines Motorzylinders übernehmen. Wird das "Verfahren zum Antrieb einer separaten Expansionsmaschine" angewendet, so können das Absperrventil 34 und die Expansionsmaschine 60 (Flügelzellenexpander) vorteilhafterweise in einem Bauteil raum- und kostensparend zusammengefasst werden.

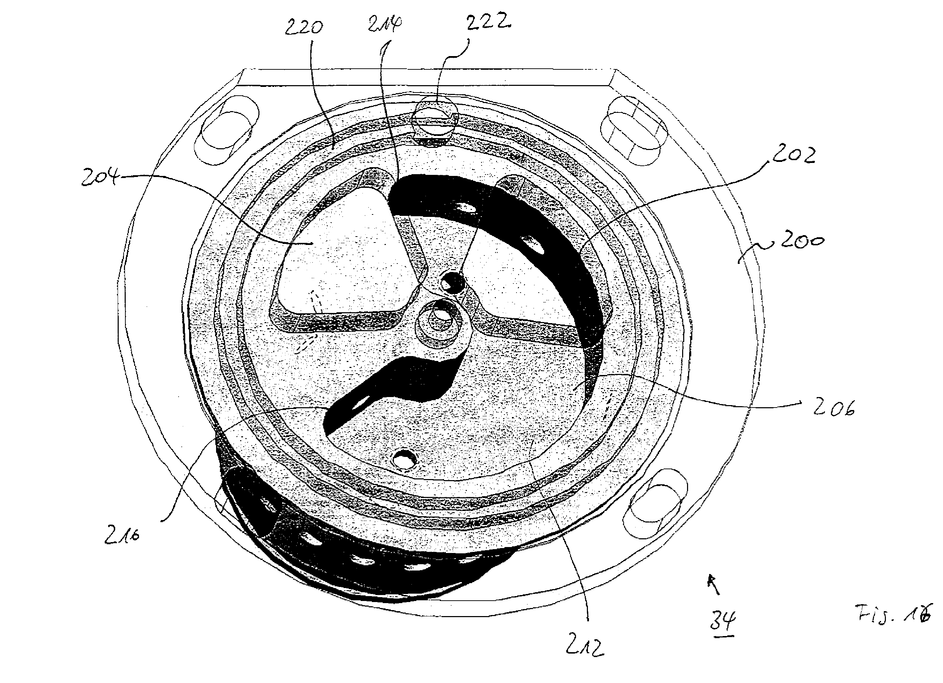

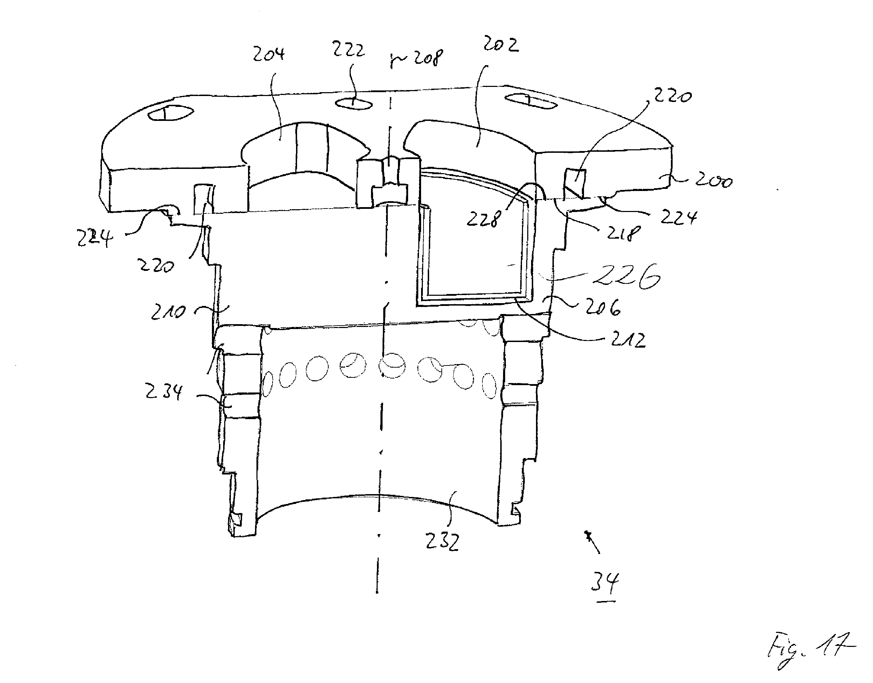

In den Fig.16 und 17 ist jeweils ein Absperrventil 34 dargestellt, wie es hinsichtlich Funktion, Bauraum und Herstellungskosten vorteilhaft und in eigenständig erfinderischer Weise ausgeführt sein kann. Dabei ist in einem feststehenden Ventilgehäuse 200 mit seinen darin integrierten Kanälen 202, 204 für die Abgasführung ein Drehschieber 206 rotierbar um die Achse 208 angeordnet. Der Drehschieber 206 weist in seinem Grundkörper 210 eine Vertiefung 212 auf, die bei Rotation des Grundkörpers 210 um die Achse 208 mit ihren Steuerkanten 214, 216 die Kanäle 202, 204 des Gehäuses im Ventilgehäuse 200 überstreicht und je nach Lage der Steuerkanten 214, 216 die Kanäle 202 und 204 gegeneinander verschließt bzw. miteinander verbindet.

Die sich gegenüberstehenden planen Flächen des Drehschiebers 206 und Ventilgehäuses 200 bilden einen vergleichsweise engen Dichtspalt 218 von beispielsweise einigen hundertstel Millimetern, der in besonders bevorzugter Ausgestaltung auf vergleichsweise geringe Leckage bei ausreichendem "Laufspiel" ausgelegt ist. In besonders bevorzugter vorteilhafter, zur Kompensation von Fertigungstoleranzen besonders geeigneter Ausgestaltung kann der Dichtspalt 218 auch einstellbar gestaltet sein, indem durch axiale Verschiebbarkeit und nachfolgende Fixierung der beiden Komponenten Drehschieber 206 einerseits und Ventilgehäuse 200 andererseits zueinander das gewünschte Spaltmaß eingestellt wird. Zur Kompensation von Fertigungstoleranzen kann in vorteilhafter Weiterbildung zumindest eine der den Dichtspalt 218 bildenden Flächen des Drehschiebers 206 bzw. des Ventilgehäuses 200 eine zum Einlaufen geeignete (durch geeignete Materialwahl vergleichsweise weiche) Beschichtung aufweisen, die sich bei gleitender Berührung nur so weit abträgt, dass ein geringer berührungsfreier Dichtspalt 218 im Betrieb entsteht.

Hierfür besonders geeignete und bevorzugte Beschichtungen können auf Kunststoffbasis (z.B.: PTFE, PEEK, etc.) oder Gleitlackbasis durch Aufspritzen, Siebdrucken oder Tauchen aufgebracht werden.

In weiterer besonders bevorzugter Weiterbildung ist im Grundkörper 210 ein umlaufender Entlastungskanal 220 angeordnet. In diesem entspannt sich ein auf Grund des gegenüber Atmosphärendruck pulsierenden Abgasüberdrucks im Absperrventil 34 im Dichtspalt 218 eventuell radial nach außen strömender, vergleichsweise geringer Leckagefluss. Über eine Abflussöffnung 222, die vorzugsweise mit der Frischluftansaugleitung des Motors und/oder der Abgasladepumpe 30, 30' verbunden ist, wird das Leckagegas aus dem Entlastungskanal 220 in der Art einer Abgasrückführung dem Motor wieder zugeführt. Ein Außenbereich 224 des Dichtspalts 218 trennt den Entlastungskanal 220 von der Atmosphärenluft. Da sich im Entlastungskanal 220 durch dessen Verbindung über die Abflussöffnung 222 mit der Unterdruck-behafteten Frischluftansaugleitung ebenfalls ein Unterdruck einstellt, findet im Außenbereich 224 des Dichtspalts 218 ebenfalls ausschließlich ein sehr geringer Leckagefluss von Außenluft in den Entlastungskanal 220 statt, und die dabei zufließende Außenluft kann zusammen mit dem Leckageabgas dem Motor wieder zugeführt werden. Mit dieser Dichtspaltanordnung ist somit in besonders vorteilhafter Weise ein Austreten von Abgas in die Atmosphäre dauerhaft und zuverlässig vermieden. Um zudem ein unerwünschtes Eindringen von Schmutzpartikeln oder Spritzwasser von außen (entgegen der Zentrifugalkraft) in den Außenbereich 224 des Dichtspalts 218 zuverlässig auszuschließen, kann in weiterer vorteilhafter Weiterbildung der Dichtspalt 218 nach außen durch handelsübliche Manschetten oder dergleichen abgedeckt werden.

Das Absperrventil kann als separate "Add-on-Komponente", also als Nachrüstteil, für bereits existierende Motoren ausgelegt und konzipiert sein. Alternativ, beispielsweise bei Neukonstruktionen, kann das Ventilgehäuse 200 einschließlich der darin integrierten Kanäle 202, 204 in vorteilhafter Ausgestaltung in den Zylinderkopf des Motors als gemeinsames Bauteil integriert sein, wobei der Drehschieber 206 vorteilhafterweise als Teilabschnitt einer Nocken- oder Hilfswelle ausgeführt sein kann.

In weiterer ganz besonders vorteilhafter Ausgestaltung kann eine gezielte Kühlung der Bauteile vorgesehen sein. Der Drehschieber 206 ist nämlich je nach Abgastemperatur möglicherweise einer hohen Wärmebelastung ausgesetzt. Um diese gering zu halten, ist vorteilhafterweise vorgesehen, den Wärmefluss in den Drehschieber 206 besonders gering zu halten und/oder eine Zwangskühlung für die thermisch besonders belasteten Bauteile vorzusehen. Zur Reduzierung des Wärmeeintrags in den Drehschieber 206 ist dazu vorteilhafterweise ein in die Vertiefung 212 eingesetztes Hitzeschild 226, vorzugsweise ein so genannter portliner in Form einer Blechwanne, vorgesehen. Diese Blechwanne endet mit ihrem Rand bevorzugt knapp unterhalb der Dichtfläche 228 und liegt in der Vertiefung 212 nur partiell auf, so dass weitgehend zwischen der Blechwanne und der Vertiefung 212 ein gasgefüllter Spalt 230 verbleibt, der den Wärmefluss aus dem Abgas in den Drehschieber 206 wirksam reduziert.

Der Drehschieber 206 kann luft- oder flüssigkeitsgekühlt ausgeführt sein. Im besonders bevorzugten Ausführungsbeispiel gem. Fig. 17 ist die Führung der Kühlluft durch den axialen Rohrabschnitt 232 des Drehschiebers 206 vorgesehen. Durch den Rohrabschnitt 232 kann die Kühlluft in den Drehschieber 206 eindringen und aus diesem durch umlaufend angeordnete Abströmöffnungen 234 entweichen. Die wärmeabgebende Oberfläche des Drehschiebers 206 kann dabei durch Kühlrippen vergrößert sein. Weiterhin ist es in vorteilhafter Weiterbildung vorgesehen, den Drehschieber 206 mit einer Spritzölkühlung zu versehen, insbesondere wenn der Drehschieber 206 auf einer Motorwelle des Verbrennungsmotors 1, 1', 1'', 1''' montiert ist und dadurch in den Ölkreislauf des Motors bereits integriert ist.

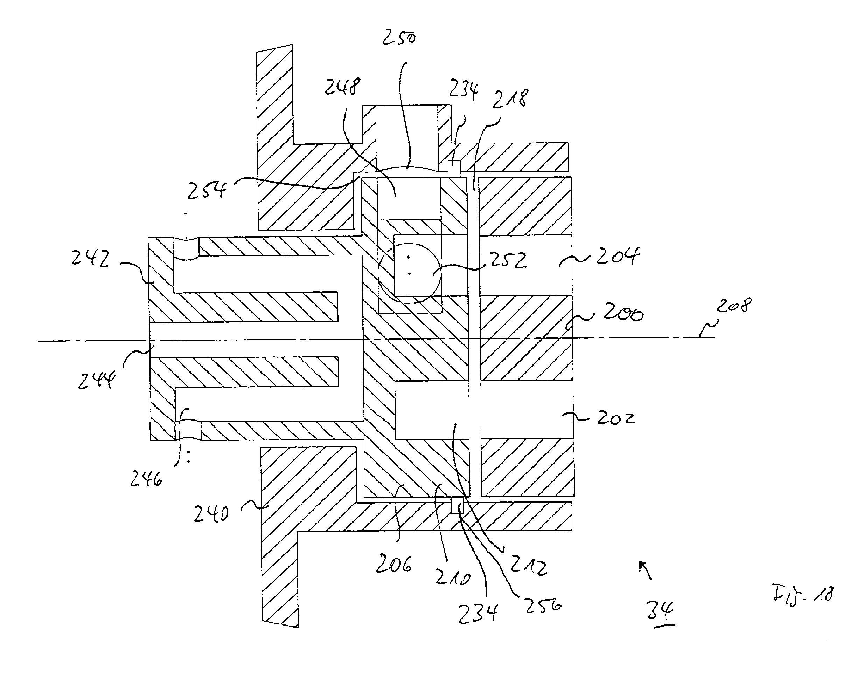

In Fig.18 ist eine besonders vorteilhafte eine Anordnung des Absperrventils 34 dargestellt, die neben einer (axialen) spaltdichtenden Abgassteuerung auch eine (radial) spaltdichtende Frischgassteuerung aufweist, um beispielsweise das "Verfahren für ausschließliche Aufladung (Drehmoment- bzw. Leistungssteigerung)" auszuführen. Das Absperrventil 34 ist dabei zweckmäßigerweise in den Zylinderkopf 240 des Verbrennungsmotors 1, 1', 1'', 1''' integriert, wobei der Drehschieber 206 auf der Nockenwelle 242 angebracht ist. Das Ventilgehäuse 200 mit seinen integrierten Abgaskanälen 202, 204 ist dabei axial einstellbar für den Dichtspalt 218 in einer Flanschverlängerung des Zylinderkopfs 240 angeordnet. Der in diesem Fall ölgekühlte Drehschieber 206 mit den Ölkanälen 244, 246 ist an seinem radialen Zylinderumfang mit einer Vertiefung 248 versehen, die mit den radial im Zylinderkopf 240 angebrachten Steueröffnungen 250, 252 korrespondieren und den komprimierten Frischgasstrom aus der Frischgasdruckleitung der Abgasladepumpe 30, 30' zum gewünschten Zeitpunkt in den Motorzylinder am Ende von dessen Saughub entspannen lassen.

Auch die Abdichtung der Steueröffnungen 250, 252 erfolgt dabei bevorzugt über einen Dichtspalt 254, der im gezeigten Ausführungsbeispiel als radialer Umfangsspalt ausgeführt ist. Auch für diese Ausführung des Absperrventils 34 ist eine Weichbeschichtung der die Dichtspalte bildenden Oberflächen als Einlaufhilfe vorteilhaft anwendbar. Um einen Gasaustausch durch Leckage zwischen Frischgas- und Abgasleitungen zu unterbinden, kann in zusätzlicher vorteilhafter Ausgestaltung eine Druckentlastungsnut 256 vorgesehen sein, die mit einer Unterdruck-behafteten Frischgassaugrohrleitung in Verbindung steht.

### Bezugszeichenliste

- 1: Verbrennungsmotor
- 2: Zylinder
- 3: Arbeitskolben
- 4: Pleuel
- 5: Kurbelwelle
- 6: Brennraum
- 7: Auspuffanlage
- 8: Gaseinlasssystem
- 9: Einlassventilsystem
- 10: Einlassventil
- 11: Abgasstrang
- 12: Auslassventilsystem
- 13: Auslassventil
- 14: Abgasleitung
- 15: Verzweigungsstelle
- 16: Abgasladepumpe
- 17: Stichleitung
- 18: Absperrventil
- 19: Frischgasleitung
- 20: Ladeluftkühler
- 21: Frischgassaugkanal
- 22: Ventil
- 23: Frischgasdruckkanal
- 24: Ventil
- 25: Motoreinlasskanal
- 26: Atmosphärenluftversorgung
- 27: Ventil
- 28: Frischgasventil
- 29: Kanalabschnitt
- 30: Expansionsmaschine
- 31: Frischgasdruckleitung
- 32: Vorauslasskanal
- 33: Hauptauslasskanal
- 34: Überströmkanal
- 35: Zylinderkopf
- 36: Drehschieber
- 37: Steuerschlitz
- 38: Auslassöffnung
- 39: Druckgehäuse
- 40: Innenvolumen
- 41: Trenneinheit
- 42: Membran
- 43: Teilvolumen
- 44: Teilvolumen
- 45: Abgasseitiger Gehäusedeckel
- 46: Frischgasseitiger Gehäusedeckel
- 47: Innenfläche
- 48: Innenfläche
- 49: Dichtung
- 50: Feder
- 51: Federteller
- 52: Abgaskanal
- 53: Hitzeschild
- 54: Rückschlagventil
- 55: Rückschlagventil
- 56: Membran
- 57: Membran
- 58: Doppelmembran
- 59: Verbindungselement
- 60: Teilvolumen
- 61: Feder
- 62: Gehäuserand
- 63: Öffnung
- 64: Membrananschlag
- 65: Durchbruch
- 66: Absatz
- 67: Spalt
- 68: Bund
- 69: Rutschdichtfläche
- 70: Rutschdichtfläche
- 71: Ringspalt
- 72: Distanzring
- 73: Umlaufring
- 74: Abstufung
- 75: Rand
- 76: Sicke
- 77: Sicke
- 78: Niet
- 79: Umbördelung
- 80: Membranrand
- 81: Schweißnaht
- 82: Sicke
- 83: Sicke
- 84: Sicke
- 85: Ventilgehäuse
- 86: Kanal
- 87: Kanal
- 88: Drehschieber
- 89: Achse
- 90: Grundkörper
- 91: Vertiefung
- 92: Steuerkante
- 93: Steuerkante
- 94: Dichtspalt
- 95: Entlastungskanal
- 96: Abflussöffnung
- 97: Außenbereich
- 98: Hitzeschild

- 99: Dichtfläche
- 100: Spalt
- 101: Rohrabschnitt
- 102: Abströmöffnung
- 103: Zylinderkopf
- 104: Nockenwelle
- 105: Ölkanal
- 106: Ölkanal
- 107: Vertiefung
- 108: Steueröffnung
- 109: Steueröffnung
- 110: Dichtspalt
- 111: Druckentlastungsnut

## Patentansprüche

1. Verfahren zum Betreiben eines Verbrennungsmotors (1, 1', 1'', 1'''), bei dem während eines Auslasstakts eines Zylinders (2) darin befindliches unter Druck stehendes Abgas aus dem Zylinder (2) ab- und einer Auspuffanlage (12) zugeführt wird, wobei das aus dem Zylinder (2) abströmende Abgas in einer ersten Taktphase des Auslasstakts ganz oder teilweise der Primärseite einer Abgasladepumpe (30, 30') zugeführt und dort arbeitsleistend weiter entspannt wird, bevor in einer zweiten Taktphase des Auslasstakts das in der Primärseite der Abgasladepumpe (30, 30') befindliche, nachentspannte Abgas gemeinsam mit sich ggf. noch im Zylinder (2) befindlichem Abgas zur Auspuffanlage (12) geleitet wird.

2. Verfahren nach Anspruch 1, bei dem die Taktphasen des Auslasstakts direkt vom Motortakt und unabhängig von individuellen Zustandsparametern der Abgasladepumpe (30, 30') oder ihrer Komponenten gesteuert werden.

3. Verfahren nach Anspruch 1 oder 2, bei dem die in der Abgasladepumpe (30, 30') auf der Primärseite in Expansionsarbeit umgewandelte Enthalpie des Abgases ganz oder teilweise auf der Sekundärseite in Kompressionsarbeit eines zugeführten Frischgasstrom umgewandelt wird.

4. Verfahren nach Anspruch 3, bei dem das in der Abgasladepumpe (30, 30') komprimierte Frischgas einem Zwischenspeicher zugeführt und dort zur Einspeisung in den Brennraum (10) des Zylinders (2) bereitgehalten wird.

5. Verfahren nach Anspruch 3, bei dem das in der Abgasladepumpe (30, 30') komprimierte Frischgas in einer Expansionsmaschine (60) arbeitsleistend entspannt wird.

6. Verbrennungsmotor (1, 1', 1 ", 1''') mit einer Anzahl von Zylindern (2), in denen jeweils ein auf eine gemeinsame Kurbelwelle (8) wirkender Arbeitskolben (4) geführt ist, wobei der Brennraum (10) des oder jedes Zylinders (2) jeweils einlassseitig über ein ansteuerbares Einlassventilsystem (16) mit einem Gaseinlasssystem (14) und auslassseitig über ein ansteuerbares Auslassventilsystem (22) sowohl mit einer Auspuffanlage (12) als auch mit der Primärseite einer Abgasladepumpe (30, 30') verbunden ist.

7. Verbrennungsmotor (1, 1', 1 ", 1''') nach Anspruch 6, dessen Auslassventilsystem (22) derart ausgelegt ist, dass es in der ersten Taktphase des Auslasstakts ausschließlich eine gasseitige Verbindung zwischen dem Brennraum (10) des oder jedes Zylinders (2) und der Primärseite der Abgasladepumpe (30, 30') freigibt, wobei die Verbindung zur Auspuffanlage (12) gesperrt ist, und in der zweiten Taktphase des Auslasstakts die gasseitige Verbindung der Auspuffanlage (12) sowohl mit dem Brennraum (10) des jeweiligen Zylinders (2) als auch mit der Primärseite der Abgasladepumpe (30, 30') herstellt.

8. Verbrennungsmotor (1, 1', 1 ", 1''') nach Anspruch 6 oder 7, dessen Auspuffanlage (12) mit dem Brennraum (10) des jeweiligen Zylinders (2) über eine mit einem Absperrventil (34) absperrbare Abgasleitung (26) verbunden ist, von der in Richtung des Abgasstroms gesehen vor dem Absperrventil (34) eine mit der Abgasladepumpe (30, 30') primärseitig verbundene Stichleitung (32) abzweigt.

9. Verbrennungsmotor (1, 1', 1 ") nach einem der Ansprüche 6 bis 8, dessen Abgasladepumpe (30, 30') sekundärseitig an eine Frischgasdruckleitung (36) und an einen Frischgassaugkanal (40) angeschlossen ist, wobei durch den Frischgassaugkanal (40) die Sekundärseite der Abgasladepumpe (30, 30') mit Frischgas befüllbar ist, und wobei die Frischgasdruckleitung (36) zur Weiterleitung und/oder Zwischenspeicherung des in der Abgasladepumpe (30, 30') komprimierten Frischgases vorgesehen und ausgelegt ist.

10. Verbrennungsmotor (1, 1', 1'') nach Anspruch 9, dessen Frischgasdruckleitung (36) abströmseitig von der Abgasladepumpe (30, 30') in einen Zwischenspeicher mündet, der ausgangsseitig mit dem Gaseinlasssystem (14) des jeweiligen Zylinders (2) verbunden ist.

11. Verbrennungsmotor (1''') nach Anspruch 9, dessen Frischgasleitung (36) abströmseitig von der Abgasladepumpe (30, 30') mit einer Expansionsmaschine (60) verbunden ist.

12. Verbrennungsmotor (1, 1', 1'', 1''') nach einem der Ansprüche 6 bis 11, dessen Abgasladepumpe (30, 30') als Membranpumpe ausgeführt ist.

13. Abgasladepumpe (30, 30'), insbesondere zur Verwendung in einem Verbrennungsmotor (1, 1', 1'', 1''') nach einem der Ansprüche 6 bis 12, mit einem Druckgehäuse (90), dessen Innenvolumen (92) über eine Anzahl von elastisch verformbaren Trenneinheiten (94) in eine Mehrzahl von gasseitig voneinander getrennten Teilvolumina (98, 100, 138) aufgeteilt ist, wobei die oder jede Trenneinheit (94) derart mit einer Vorspannkraft beaufschlagt ist, dass im drucklosen Zustand das zur Verbindung mit dem Abgassystem (20) des Verbrennungsmotors (1, 1', 1'', 1''') vorgesehene Teilvolumen (98) im Rahmen der Verformbarkeit der oder jeder Trenneinheit (94) einen Minimalwert aufweist.

14. Abgasladepumpe (30, 30') nach Anspruch 13, die als Membranpumpe ausgeführt ist.

15. Absperrventil (34), insbesondere zur Verwendung als Absperrventil (34) für die Abgasleitung (26) in einem Verbrennungsmotor nach einem der Ansprüche 6 bis 11, dessen Absperrkörper als rotierender Drehschieber (206) ausgeführt ist, wobei axiale Stirnflächen und/oder radiale Umfangsflächen des Drehschiebers (206) durch Aussparungen (212, 248) mit im Gehäuse (200) bzw. Zylinderkopf (240) korrespondierenden Kanälen (202, 204, 250, 252) die Kanalöffnungen der Abgasleitung (26) und/oder der Frischgasdruckleitung (36) steuern.
